# EUROPEAN PATENT APPLICATION

(11) **EP 4 852 085 A2**
(43) Date of publication of application: **09.12.2026**
(21) Application number: 26178969.7
(22) Date of filing: 15.05.2026
(51) Int. Cl.: H01M 4/36, H01M 4/58, H01M 4/485, H01M 4/505, H01M 4/525, H01M 10/0525, H01M 4/02

(54) **COMPOSITE POSITIVE ELECTRODE ACTIVE MATERIALS, METHODS FOR PREPARING THE SAME, AND RECHARGEABLE LITHIUM BATTERIES**

(30) Priority: 14.05.2025 KR 20250062706; 13.05.2026 KR 20260086472
(71) Applicant: SAMSUNG SDI CO., LTD., Yongin-si, Gyeonggi-do 17084 (KR)
(72) Inventor: KIM, Young-Ki, 17084 Yongin-si, Gyeonggi-do (KR); KIM, Sangmi, 17084 Yongin-si, Gyeonggi-do (KR); DOO, Sungwook, 17084 Yongin-si, Gyeonggi-do (KR); KANG, Gwiwoon, 17084 Yongin-si, Gyeonggi-do (KR); KANG, Minchul, 17084 Yongin-si, Gyeonggi-do (KR); LEE, Soonrewl, 17084 Yongin-si, Gyeonggi-do (KR)
(74) Representative: Bardehle Pagenberg Partnerschaft mbB Patentanwälte Rechtsanwälte

(57) **Abstract**

Disclosed are a composite positive electrode active material, a method for preparing the same, and a rechargeable lithium battery. The composite positive electrode active material includes a first positive electrode active material including a lithium iron phosphate-based compound in a form of primary particles, a second positive electrode active material including a lithium manganese-based oxide in a form of primary particles, and an irreversible positive electrode additive including lithium cobalt-based oxide in a form of primary particles. The composite positive electrode active material has a particle form including a plurality of primary particles of the first positive electrode active material, a plurality of primary particles of the second positive electrode active material, and a plurality of primary particles of the irreversible positive electrode additive.

## Description

### CROSS-REFERENCE TO RELATED APPLICATION

This application claims priority to Korean Patent Application No. 10-2025-0062706 filed with the Korean Intellectual Property Office on 14 May 2025, and Korean Patent Application No. 10-2026-0086472 filed with the Korean Intellectual Property Office on 13 May 2026, the entire contents of which are incorporated herein by reference.

### BACKGROUND

### 1. Field

Composite positive electrode active materials, methods of preparing the composite positive electrode active materials, and rechargeable lithium batteries are disclosed.

### 2. Description of the Related Art

A portable information device such as a cell phone, a laptop, smart phone, and the like or an electric vehicle uses a rechargeable lithium battery having high energy density as a driving power source. Using a rechargeable lithium battery with high energy density as a driving power source for hybrid or electric vehicles or power storage power source may be advantageous.

As positive electrode active materials used in rechargeable lithium batteries, a lithium cobalt-based composite oxide such as lithium cobalt-based oxide (LiCoO₂), a lithium nickel-based composite oxide such as lithium nickel-cobalt-manganese oxide (NCM), and a lithium nickel-cobalt-aluminum oxide (NCA), and a lithium iron phosphate-based compound are known. Among them, the low-cost lithium iron phosphate-based compound which uses relatively inexpensive iron (Fe) as the main component are attracting attention due to the high prices of nickel (Ni) and cobalt (Co).

However, the lithium iron phosphate-based positive electrode active material exhibits a phenomenon in which cycle-life characteristics deteriorate at high voltage, and thus there is a limit to the voltage of use. The lithium iron phosphate-based positive electrode active material also has a disadvantage of low capacity and energy density.

### SUMMARY

The present disclosure includes a composite positive electrode active material, a method for preparing the composite positive electrode active material, and a rechargeable lithium battery, which secure price competitiveness, increase average voltage, improve charge/discharge capacity and efficiency, low-temperature discharge capacity, and cycle-life characteristics, and improve powder characteristics to enhance pellet density and significantly increase capacity per volume.

Some example embodiments include a composite positive electrode active material including a first positive electrode active material including a lithium iron phosphate-based compound in a form of primary particles, a second positive electrode active material including a lithium manganese-based oxide in a form of primary particles (or single particles), and an irreversible positive electrode additive including lithium cobalt-based oxide in a form of primary particles (or single particles). The composite positive electrode active material has a particle form including a plurality of the primary particles of the first positive electrode active material, a plurality of the primary particles (or the single particles) of the second positive electrode active material, and a plurality of the primary particles (or the single particles) of the irreversible positive electrode additive.

Some example embodiments include a method for preparing a composite positive electrode active material, which includes preparing a first positive electrode active material including a lithium iron phosphate-based compound in a form of primary particles, mixing and wet milling (or wet dispersing) the first positive electrode active material, a second positive electrode active material including a lithium manganese-based oxide in a form of secondary particles in which a plurality of primary particles are agglomerated (or in a form of single particles), and an irreversible positive electrode additive including lithium cobalt-based oxide in a form of primary particles (or single particles); and adding the first slurry to a spray dryer and spray drying the same to prepare a first dried product.

Some example embodiments include a rechargeable lithium battery including a positive electrode including a positive electrode current collector, and a positive electrode active material layer disposed on the positive electrode current collector and including the aforementioned composite positive electrode active material, a negative electrode, and an electrolyte.

The composite positive electrode active material according to some example embodiments may secure price competitiveness while improving charge/discharge capacity and efficiency thereof, low-temperature discharge capacity, and cycle-life characteristics, and may improve powder characteristics to improve pellet density and significantly increase capacity per volume.

### BRIEF DESCRIPTION OF THE DRAWINGS

FIG. 1 is a schematic perspective view showing a portion of a cylindrical rechargeable lithium battery cut away.
FIG. 2 is a cross-sectional view schematically showing a prismatic rechargeable lithium battery.
FIG. 3 and FIG. 4 are schematic exploded perspective views of pouch-type rechargeable lithium batteries.
FIG. 5 is a scanning electron microscope (SEM) photograph of a cross-section of a composite positive electrode active material prepared in Example 2.
FIG. 6 is a flowchart illustrating a method of preparing a composite positive electrode active material, according to an example embodiment.

### DETAILED DESCRIPTION

Hereinafter, example embodiments are described in detail so that those of ordinary skill in the art can readily implement the example embodiments. However, this disclosure may be embodied in many different forms and is not construed as limited to the example embodiments set forth herein.

The terminology used herein is used to describe example embodiments only, and is not intended to limit the present disclosure. The singular expression includes the plural expression unless the context clearly dictates otherwise.

As used herein, "combination thereof" refers to a mixture, a laminate, a composite, a copolymer, an alloy, a blend, a reaction product, and the like of the constituents.

As used herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, and the like, may be exaggerated for clarity and like reference numerals designate like elements throughout the specification. It is understood that when an element such as a layer, film, region, or substrate is referred to as being "on" another element, the element can be directly on the other element, or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope (TEM) image or a scanning electron microscope (SEM) image. Alternatively, it is possible to obtain an average particle diameter value by measuring using a dynamic light scattering method, performing data analysis, counting the number of particles for each particle size range, and calculating the average particle diameter value based on the count of particles. As used herein, when a definition is not otherwise provided, the average particle diameter (D₅₀) may mean a diameter of particles having a cumulative volume of 50 vol% in the particle size distribution, wherein the particles are assumed to be spherical. As used herein, when a definition is not otherwise provided, the average particle diameter refers to a value obtained by measuring the sizes of 20 randomly selected particles from a scanning electron microscope (SEM) image and calculating an arithmetic mean of the sizes of 20 randomly selected particles, wherein the size of each particle is defined as a diameter in the case of a spherical particle, and as a square root of a product of a major axis length and a minor axis length in the case of a non-spherical particle. That said, the (more specific) average particle diameter D₅₀ is hereby defined to refer to a diameter of particles having a cumulative volume of 50 vol% in the particle size distribution that is obtained by measuring the size (diameter or major axis length) of about 30 particles at random in a scanning electron microscope image. Herein, the size of may vary depending on the particle shape in terms of the measurement target. For example, the diameter may be measured for spherical particles, whereas the length of the major axis may be measured for non-spherical particles.

Herein, "or" is not to be construed as an exclusive meaning, for example, "A or B" is construed to include A, B, A+B, and the like.

"Metal" is interpreted as a concept including ordinary metals, transition metals and metalloids (semi-metals). As used herein, the term "metalloid" refers to an element having properties intermediate between those of metals and non-metals. Examples of the metalloid include, but are not limited to, boron (B), silicon (Si), germanium (Ge), arsenic (As), antimony (Sb), and tellurium (Te).

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

As used herein, the term "vacuum" refers to a pressure in the range of 0.1 mbar to 10 mbar, as measured in the treatment chamber using a vacuum gauge.

As used herein, the term "primary particle" refers to a minimum unit particle that is recognized as a primary particle agglomerate when a positive electrode active material is observed using a scanning electron microscope (SEM), in which a grain boundary is not clearly distinguishable or is not substantially observed. A primary particle is a basic unit constituting a secondary particle formed by aggregation of tens to hundreds of particles, and may exist alone or in a state in which a small number (for example, 20 or less) of primary particles are in contact with each other.

As used herein, the term "secondary particle" refers to an agglomerate of primary particles of a given material, and may also be referred to as an assembly in the present disclosure. A secondary particle has a structure in which the primary particles are combined into a primary particle form through interparticle contact and bonding, rather than being simply physically mixed. A secondary particle may be recognized as a primary particle form in which a plurality of primary particles are aggregated when observed using a scanning electron microscope (SEM). Such a secondary particle is distinguished from a simple mixture in which respective particles are independently dispersed. A secondary particle may be formed by a spray-drying process, or the like.

### Composite Positive Electrode Active Material

A composite positive electrode active material according to some example embodiments includes a first positive electrode active material including a lithium iron phosphate-based compound in a form of primary particles, a second positive electrode active material including a lithium manganese-based oxide in a form of primary particles (or single particles), and an irreversible positive electrode additive including lithium cobalt-based oxide in a form of primary particles (or single particles). The composite positive electrode active material has a particle form including a plurality of the primary particles of the first positive electrode active material, a plurality of the primary particles (or the single particles) of the second positive electrode active material, and a plurality of the primary particles (or the single particles) of the irreversible positive electrode additive.

The lithium iron phosphate-based compound that has desired or improved structural stability, high heat resistance, and price competitiveness is attracting attention. However, although the lithium iron phosphate-based compound has desired or improved cycle-life characteristics, their cycle-life characteristics deteriorate when used at high voltages, so their usable voltage is limited.

Accordingly, there is an attempt to simply mix and use lithium manganese-based oxide, which is a low-cost material with a high average voltage. In this case, although the average voltage is improved, initial charge/discharge efficiency, discharge capacity at low temperatures (e.g., -20 °C), cycle-life characteristics, and high-temperature storage characteristics may be deteriorated, and the capacity per volume may still be low.

A composite positive electrode active material according to some example embodiments includes a lithium iron phosphate-based compound to secure price competitiveness, and includes a lithium manganese-based oxide which may be used at high voltages and is relatively inexpensive compared to a lithium iron phosphate-based compound, and at the same time further includes an irreversible positive electrode additive in a form of primary particles (or single particles), so that the composite positive electrode active material has a particle form including primary particles of the lithium iron phosphate-based compound, primary particles (or single particles) of the lithium manganese-based oxide, and primary particles (or single particles) of the irreversible positive electrode additive, for example, a single secondary particle form in which the primary particles of the lithium iron phosphate-based compound, primary particles (or single particles) of the lithium manganese-based oxide, and primary particles (or single particles) of the irreversible positive electrode additive are agglomerated together, and for example, an assembly form, so that the charge/discharge capacity and efficiency at high voltage, low-temperature discharge capacity, and cycle-life characteristics are improved, and the powder characteristics are improved so that the pellet density is improved, and at the same time, the capacity per volume may be greatly increased.

### First Positive Electrode Active Material

The first positive electrode active material includes a lithium iron phosphate-based compound. The composite positive electrode active material may secure price competitiveness while also having desired or improved structural stability and thermal stability by including a lithium iron phosphate-based compound as the first positive electrode active material.

The lithium iron phosphate-based compound may include, for example a compound represented by Chemical Formula 1, a compound represented by Chemical Formula 2, or a combination thereof.

Chemical Formula 1: Liₐ₁Fe₍₁₋ₓ₁₎M¹ₓ₁PO₄.

In Chemical Formula 1, 0.9≤a1≤1.5, 0≤x1≤0.4, and M¹ is Al, Ca, Ce, Cr, Cu, La, Mg, Mn, Mo, Nb, Ni, Sn, Sr, Ti, V, W, Y, Zn, Zr, or a combination thereof. Herein, 0.90≤a1≤1.5, for example, 0.90≤a1≤1.2, or 0.95≤a1≤1.1. Additionally, 0≤x1≤0.4, 0≤x1≤0.3, 0≤x1≤0.2, 0≤x1≤0.1 or 0.001≤x1≤0.05.

Chemical Formula 2: Lia₂Mnₓ₂Fe_{(1-x2-y2)}M²_{y2}PO₄.

In Chemical Formula 2, 0.9≤a2≤1.5, 0.1≤x2≤0.9, 0≤y2<0.9, optionally x2+y2<1, and M² is Al, Ca, Ce, Cr, Cu, La, Mg, Mo, Nb, Ni, Sn, Sr, Ti, V, W, Y, Zn, Zr, or a combination thereof. Herein, 0.90≤a2≤1.5, for example 0.90≤a2≤ 1.2, or 0.95≤a2≤1.1. In addition, 0.1≤x2≤0.9, 0.3≤x2≤0.9, or 0.4≤x2≤0.8 and 0≤y2≤0.4, 0≤y2≤0.3, 0≤y2≤0.2, 0≤y2≤0.1, or 0≤y2≤0.05.

For example, the lithium iron phosphate-based compound may include at least one of LiFePO₄, LiMn_{0.7}Fe_{0.3}PO₄, LiMn_{0.6}Fe_{0.4}PO₄, LiMn_{0.5}Fe_{0.5}PO₄, LiMn_{0.4}Fe_{0.6}PO₄, LiMn_{0.3}Fe_{0.7}PO₄, or a combination thereof, but is not limited thereto.

The lithium iron phosphate-based compound may include at least one of Al, Mg, Ti, V, or a combination thereof as a type of doping element, and the at least one of Al, Mg, Ti, V, or the combination thereof may be included in an amount in a range of about 0.1 mol% to about 0.5 mol%, from about 0.2 mol% to about 0.5 mol%, from about 0.3 mol% to about 0.5 mol%, or about 0.4 mol%, based on a total metal excluding lithium.

For example, the lithium iron phosphate-based compound may include at least one of Ti, Al, or a combination thereof as a doping element, and a Ti content may be in a range of about 0.1 mol% to about 0.5 mol%, from about 0.2 mol% to about 0.5 mol%, from about 0.3 mol% to about 0.5 mol%, or about 0.4 mol%, based on a total metal excluding lithium, and an Al content may be in a range of about 0.1 mol% to about 0.5 mol% based on a total metal excluding lithium. In this case, the rate characteristics and cycle-life characteristics may be improved.

For example, M¹ of Chemical Formula 1 and M² of Chemical Formula 2 may include Al, Mg, Ti, V, or a combination thereof, in which case cycle-life characteristics of the lithium iron phosphate-based positive electrode active material may be improved. In Chemical Formulas 1 and 2, Al, Mg, Ti, V, or a combination thereof may be included in an amount in a range of about 0.1 mol% to about 0.5 mol%, from about 0.2 mol% to about 0.5 mol%, from about 0.3 mol% to about 0.5 mol%, or about 0.4 mol%, or about 0.1 mol% to about 0.4 mol%, based on a total metal excluding lithium, and in this case, cycle-life characteristics of the lithium iron phosphate-based positive electrode active material may be improved. For example, in Chemical Formula 1, 0.001≤x1≤0.005, 0.002≤x1≤0.005, 0.003≤x1≤0.005, or x1=0.004, or 0.001≤x1≤0.004, and in Chemical Formula 2, 0.001≤x2≤0.005, 0.002≤x2≤0.005, 0.003≤x2≤0.005, or x2=0.004, or 0.001≤x2≤0.004, in which case cycle-life characteristics of the lithium iron phosphate-based positive electrode active material may be improved.

The first positive electrode active material is in a form of primary particles, and an average particle diameter of the primary particles of the first positive electrode active material may be less than about 2 µm. The average particle diameter, including the (more specific) average particle diameter D₅₀, of the primary particles of the first positive electrode active material may be, for example, greater than or equal to about 0.1 µm less than about 2 µm, from about 0.1 µm to about 1.8 µm, from about 0.1 µm to about 1.6 µm, from about 0.1 µm to about 1.4 µm, from about 0.1 µm to about 1.2 µm, from about 0.1 µm to about 1 µm, from about 0.1 µm to about 0.8 µm, from about 0.2 µm to about 0.8 µm, from about 0.3 µm to about 0.7 µm, or about 0.5 µm.. The average particle diameter of the primary particles of the first positive electrode active material may be obtained by measuring the sizes of about 30 or 20 primary particles of the first positive electrode active material in an electron microscope image of the surface or cross-section of the positive electrode active material, and calculating an arithmetic mean of the size of each particle, wherein the size of each particle is defined as a diameter in the case of a spherical particle, and as a square root of a product of a major axis length and a minor axis length in the case of a non-spherical particle. An average particle diameter of the primary particles of the first positive electrode active material may be smaller than an average particle diameter of the primary particles (or the single particles) of the second positive electrode active material and an average particle diameter of the primary particles of the irreversible positive electrode additive described below, respectively.

According to some example embodiments, the first positive electrode active material may have primary particles that are small and uniform, or substantially uniform, in size. Accordingly, the composite positive electrode active material has high charge/discharge capacity and desired or improved cycle-life characteristics.

In addition, as measured by an SEM image of a cross-section of the composite positive electrode active material, an arithmetic mean size of the primary particles of the first positive electrode active material constituting the composite positive electrode active material may be less than or equal to about 200 nm, in a range of about 50 nm to about 200 nm, or about 100 nm to about 200 nm, and the standard deviation thereof may be less than or equal to about 100 nm, less than or equal to about 50 nm, or less than or equal to about 30 nm, and may be greater than or equal to about 5 nm, greater than or equal to about 10 nm, or greater than or equal to about 12 nm. The arithmetic mean size and its standard deviation of the primary particles of the first positive electrode active material may be obtained by measuring the size of about 30 or 20 random primary particles of the first positive electrode active material in an SEM image or TEM image of the surface or cross-section of the composite positive electrode active material, and calculating the arithmetic average value and the standard deviation value thereof, wherein the size of each particle is defined as a diameter in the case of a spherical particle, and as a square root of a product of a major axis length and a minor axis length in the case of a non-spherical particle.

The first positive electrode active material may further include a carbon coating layer on the surface of the primary particles. The carbon coating layer may improve electrical conductivity of the first positive electrode active material and lower the resistance of the positive electrode.

The carbon coating layer may include amorphous carbon, and may be formed using, for example, glucose, sucrose, lactose, starch, oligosaccharide, polyoligosaccharide, fructose, cellulose, poly(furfuryl alcohol), polyethylene glycol, a block copolymer of ethylene and ethylene oxide, a vinyl-based resin, a cellulose-based resin, a phenolic resin, a pitch-based resin, a tar-based resin, or a combination (e.g., a polymer) thereof.

For example, the carbon coating layer may be formed by disposing the carbon raw material on the surface of the first positive electrode active material particles, and then performing a firing process. For example, the carbon raw material and primary particles may be mixed together and fired to form a carbon coating layer on the surface of the primary particles, or the carbon raw material and secondary particles may be mixed together and fired to form a carbon coating layer on the surface of the secondary particles, and then pulverized to prepare primary particles having a carbon coating layer.

The carbon coating layer may be included in an amount in a range of about 0.1 wt% to about 3.9 wt%, for example, about 0.5 wt% to about 3.9 wt%, about 1 wt% to about 3.9 wt%, about 1.5 wt% to about 3.9 wt%, or about 1.7 wt% to about 3.9 wt% based on 100 wt% of the first positive electrode active material. For example, the amount of the carbon coating layer may be greater than or equal to about 1.5 wt%, greater than about 1.5 wt%, greater than or equal to about 1.6 wt%, greater than or equal to about 1.7 wt%, or greater than or equal to about t 1.8 wt% based on 100 wt% of the first positive electrode active material. The amount of the carbon coating layer may be analyzed by, for example, completely combusting the first positive electrode active material at a high temperature in a range of about 1200 °C to about 1400 °C and in an oxygen atmosphere to convert carbon and sulfur in the first positive electrode active material into CO ₂ (or CO) and SO₂ forms, respectively. An amount of the carbon coating layer may be the carbon content based on 100 wt% of the first positive electrode active material.

The first positive electrode active material may be manufactured by a known method or may be a commercially available product. For example, the first positive electrode active material may be obtained by pulverizing secondary particles formed by aggregation of a plurality of primary particles and includes a lithium iron phosphate-based compound.

### Second Positive Electrode Active Material

The second positive electrode active material includes a lithium manganese-based composite oxide. The lithium manganese-based oxide included in the second positive electrode active material may have a spinel structure. The lithium manganese-based oxide with a spinel structure has a cubic crystal structure, and because the lithium manganese-based oxide substantially has a three-dimensional crystal structure, a movement path of lithium ions is short, ionic conductivity is high, and the overall structure does not collapse when lithium ions are removed, making the lithium manganese-based oxide substantially stable.

The lithium manganese-based oxide may be or include, for example, a lithium manganese-based oxide having a spinel structure with LiMn₂O₄ as its basic composition. The lithium manganese-based oxide may further contain, in addition to manganese, at least one of aluminum, magnesium, yttrium, or a combination thereof, and may not contain cobalt or may contain a substantially small amount of cobalt. For example, the content of cobalt in the lithium manganese-based oxide, based on 100 mol% of metals excluding lithium, may be 5 wt% or less, 3 wt% or less, or 1 wt% or less, and may be 0 wt% or more.

The lithium manganese-based oxide may be represented, for example, by Chemical Formula 3.

Chemical Formula 3: Liₐ₃Mnₓ₃M³_{y3}O_{4-b3}X_{b3}.

In Chemical Formula 3, 0.9≤a3≤1.8, 1.7≤x3≤2, 0≤y3≤0.3, 1.9≤x3+y3≤2.1, and 0≤b3≤0.1, M³ is Al, B, Ba, Ca, Ce, Cr, Fe, Mg, Mo, Nb, Si, Sn, Sr, Ti, V, W, Y, Zr, or a combination thereof, and X is F, P, S, or a combination thereof.

In Chemical Formula 3, 1.8≤x3≤2, 0≤y3≤0.2, 1.9≤x3≤2, 0≤y3≤0.1, or 1.7≤x3<2, 0<y3≤0.3.

For example, the lithium manganese-based oxide may be represented by Chemical Formula 4.

Chemical Formula 4: Liₐ₄Mnₓ₄Al_{y4}Mg_{z4}M⁴_{w4}O_{4-b4}X_{b4}.

In Chemical Formula 4, 0.9≤a4≤1.8, 1.7≤x4<2.0, 0<y4≤0.015, 0<z4≤0.010, 0≤w4<0.3, 1.9≤x4+y4+z4+w4≤2.1, and 0≤b4≤0.1, M⁴ is B, Ba, Ca, Ce, Cr, Fe, Mo, Nb, Si, Sn, Sr, Ti, V, W, Y, Zr, or a combination thereof, and X is F, P, S, or a combination thereof.

The second positive electrode active material is in the form of primary particles (or single particles), and an average particle diameter, including the (more specific) average particle diameter D₅₀, of the primary particles of the second positive electrode active material may be greater than or equal to about 2 µm. The average particle diameter of the primary particles (or the single particles) of the second positive electrode active material may be, for example, in a range of about 2 µm to about 10 µm, about 2 µm to about 9.5 µm, about 2 µm to about 9 µm, about 2.5 µm to about 9 µm, about 3 µm to about 9 µm, about 3 µm to about 7 µm, or about 3 µm to about 5 µm. The average particle diameter of the primary particles (or the single particles) of the second positive electrode active material may be greater than the average particle diameter of the primary particles of the aforementioned first positive electrode active material. That is, the primary particles of the first positive electrode active material and the primary particles (or single particles) of the second positive electrode active material within the secondary particles may be distinguished based on particle size. The average particle diameter may be obtained by measuring the sizes of about 30 or 20 random particles of the second positive electrode active material from a scanning electron microscope image-wherein, in the case of spherical particles, the diameter is measured, and in the case of non-spherical particles, the square root of the product of the major axis length and the minor axis length is measured-and then calculating the arithmetic mean of the size of each primary particle of the second positive electrode active material. In addition, the second positive electrode active material and the irreversible positive electrode additive can be distinguished based on differences in particle morphology observed in electron microscopy images and elemental distribution determined by energy-dispersive X-ray spectroscopy (EDX). Specifically, a cross-sectional or surface image of the composite positive electrode active material is obtained using scanning electron microscopy (SEM), and EDX analysis is performed on the same field of view to map the elemental distribution. In this case, the second positive electrode active material is a lithium manganese-based oxide and contains Mn as a main transition metal element, forming a uniform oxide phase, whereas the irreversible positive electrode additive may exist as a separate phase having a different elemental composition, such as a lithium metal oxide or a metal oxide containing Co. Furthermore, even when particle sizes are similar, the two components can be distinguished by the presence or absence of Mn distribution in the EDX mapping results, or by spatial differences in the distribution of Mn and other transition metal elements. If necessary, STEM-EDS line scan analysis may be additionally used to further confirm the Mn concentration distribution across the particle surface and interior.

The second positive electrode active material may further include a coating layer on the surface of the primary particles (or the single particles). The coating layer may include a compound including an element of Al, Ti, W, B, F, P, Mg, Ni, Co, Fe, Cr, V, Cu, Ca, Zn, Zr, Nb, Mo, Sr, Sb, Bi, Si, S, or a combination thereof. When the coating layer including the compound is formed on the surface of the second positive electrode active material, contact between the lithium manganese-based oxide and the electrolyte solution is blocked, thereby reducing or suppressing gas generation during charging and discharging and reducing or suppressing manganese from being eluted at high temperatures. For example, the coating layer may include ZnO, Al₂O₃, TiO₂, WO₃, MgO, CaO, B₂O₃, NbO₂, SrO, CrO, Mo₂O₅, Bi₂O₃, SiO₂, or a combination thereof. The coating layer may be present discontinuously, or may be present continuously.

The second positive electrode active material may be manufactured by a known method or may be a commercially available product.

The second positive electrode active material may be prepared by a solid-state reaction method or the like. For example, it may be manufactured by mixing a lithium precursor and a manganese precursor at a predetermined molar ratio, followed by heat treatment in an oxygen atmosphere.

Examples of the lithium precursor may include Li₂CO₃, LiOH, and LiNO₃, and examples of the manganese precursor may include Mn₂O₃, MnO₂, and Mn₃O₄.

The mixing may be performed by a dry mixing or wet mixing method, and methods such as ball milling may be used. Thereafter, the mixture may be calcined in an oxygen atmosphere or air atmosphere at a temperature of about 600°C to 1000°C to form a lithium manganese oxide having a spinel structure. If necessary, a pulverization, classification, or sieving process may be further performed.

The second positive electrode active material may be prepared in a secondary particle form in which primary particles (or single particles) are aggregated, and the secondary particles may be subsequently disintegrated into primary particles (or single particles) during a wet milling process to constitute an assembly of the composite positive electrode active material.

### irreversible positive electrode additive

The composite positive electrode active material includes the aforementioned first positive electrode active material including lithium iron phosphate-based compound and the aforementioned second positive electrode active material including lithium manganese-based oxide, together with the irreversible positive electrode additive including lithium cobalt-based oxide in a form of primary particles (or single particles).

The irreversible positive electrode additive refers to a compound that constitutes a sacrificial positive electrode that can compensate for the conversion to irreversible lithium that no longer participates in the charge and discharge reaction by participating in the formation of a SEI (solid electrolyte interface) film on the negative electrode surface during charge/discharge. The irreversible positive electrode additive is a compound that can be decomposed during the formation process to provide Li, and does not participate in the subsequent charge/discharge process. By adding such an irreversible positive electrode additive, the consumed lithium may be replenished, thereby compensating for lithium loss and improving the energy density, cycle-life, and stability of the battery.

Some of the lithium included in the positive electrode active material participates in the formation of a solid electrolyte interface (SEI) film and an irreversible reaction within the negative electrode during charge and discharge, and is converted to irreversible lithium that no longer participates in charge and discharge reactions. This may cause a challenge of reduced capacity, but the above challenge may be addressed by including the irreversible positive electrode additive, and further, the discharge capacity at low temperature (-20 °C) may be improved, and the pellet density may be improved due to improved powder characteristics.

The lithium cobalt-based oxide may be represented by Chemical Formula 5.

Chemical Formula 5: LiₓCoO_{y}.

In Chemical Formula 5, 1<x≤6, and 1≤y≤4.

For example, the lithium cobalt-based oxide may include Li₆CoO₄, Li₅CoO₄, Li₄CoO₃, or a combination thereof. It may or may not include Li_{1+z}CoO₂ (0<z<1).

For example, the lithium cobalt-based oxide may include Li₆CoO₄, in which case a large amount of lithium may be provided in the formation process, thereby compensating for a large amount of irreversible lithium, and thus greatly improving the effect of the irreversible positive electrode additive.

Based on 100 wt% of the irreversible positive electrode additive, an amount of the lithium cobalt-based oxide may be greater than or equal to about 80 wt%, greater than or equal to about 85 wt%, greater than or equal to about 90 wt%, greater than or equal to about 95 wt%, greater than or equal to about 99 wt%, or about 100 wt%. For example, the irreversible positive electrode additive may be composed of lithium cobalt-based oxide alone. When lithium cobalt-based oxide is used as the irreversible positive electrode additive, lithium may be stably discharged in the initial charge voltage range of about 3.9 V to about 4.2 V, and thus the charging efficiency is higher and lithium compensation timing control is easier than when other irreversible positive electrode additives are used. In addition, the cobalt-based oxide formed after lithium is deintercalated from the lithium cobalt-based oxide does not cause additional reactions within the cell or has substantially low reactivity, unlike other irreversible positive electrode additives, and thus has desired or improved long-term stability of the cell and reduction or suppression of side reactions.

The irreversible positive electrode additive is in the form of primary particles (or single particles), and an average particle diameter, such as the (more specific) average particle diameter D₅₀, of the primary particles of the irreversible positive electrode additive may be greater than or equal to about 2 µm. The average particle diameter of the primary particles of the irreversible positive electrode additive may be, for example, in a range of about 2 µm to about 10 µm, about 3 µm to about 10 µm, about 4 µm to about 10 µm, about 6 µm to about 10 µm, about 6 µm to about 9 µm, or about 7 µm to about 8 µm. The average particle diameter may be obtained by measuring the sizes of 20 random particles of the irreversible positive electrode additive from a scanning electron microscope image-wherein, in the case of spherical particles, the diameter is measured, and in the case of non-spherical particles, the square root of the product of the major axis length and the minor axis length is measured-and then calculating the arithmetic mean of the size of each primary particle (or single particle) of the irreversible positive electrode additive. The average particle diameter of the irreversible positive electrode additive may be larger than that of the aforementioned first positive electrode active material. In other words, the primary particles (or the single particles) of the first positive electrode active material and the primary particles (or the single particles) of the irreversible positive electrode additive within the secondary particles may be distinguishable based on particle size. If (when) the average particle diameter of the irreversible positive electrode additive is within the above range, the pellet density may be improved, and a large amount of lithium may be provided in the formation process, thereby compensating for a large amount of irreversible lithium. In addition, if (when) the average particle diameter of the irreversible positive electrode additive is larger than the above range, it may be challenging to properly perform the spray drying process described below, and even if (when) spray drying is performed, it may be challenging to form an assembly as in some example embodiments.

In addition, the second positive electrode active material and the irreversible positive electrode additive may be distinguished based on differences in particle morphology observed in electron microscopy images and elemental distribution determined by energy-dispersive X-ray spectroscopy (EDX). Specifically, a cross-sectional or surface image of the composite positive electrode active material is obtained using scanning electron microscopy (SEM), and EDX analysis is performed on the same field of view to map the elemental distribution. In this case, the second positive electrode active material is a lithium manganese-based oxide and contains Mn as a main transition metal element, forming a uniform oxide phase, whereas the irreversible positive electrode additive may exist as a separate phase having a different elemental composition, such as a lithium metal oxide or a metal oxide containing Co. Furthermore, even when particle sizes are similar, the two components can be distinguished by the presence or absence of Mn distribution in the EDX mapping results, or by spatial differences in the distribution of Mn and other transition metal elements. If necessary, STEM-EDS line scan analysis may be additionally used to further confirm the Mn concentration distribution across the particle surface and interior. The average particle diameter may be obtained, for example, by selecting 20 particles in a scanning electron microscopy image and measuring the particle size (in the case of spherical particles, diameter; in the case of non-spherical particles, the square root of the product of the major axis length and the minor axis length), and calculating the arithmetic mean thereof.

### Composite Positive Electrode Active Material

The composite positive electrode active material has a particle form including the plurality of the primary particles of the first positive electrode active material, the plurality of the primary particles (or the single particles) of the second positive electrode active material, and the plurality of primary particles (or single particles) of the irreversible positive electrode additive. Herein, the particle form of the composite positive electrode active material may be a form of secondary particles or an assembly form in which the aforementioned primary particles of the first positive electrode active material, primary particles (or single particles) of the second positive electrode active material and primary particles (or single particles) of the irreversible positive electrode additive are agglomerated. For example, within the particle of the composite positive electrode active material, primary particles of the first positive electrode active material, primary particles (or single particles) of the second positive electrode active material, and primary particles (or single particles) of the irreversible positive electrode additive may be present. The secondary particles of the composite positive electrode active material are formed by agglomeration of a plurality of primary particles, and some are the primary particles of the first positive electrode active material, some are the primary particles (or the single particles) of the second positive electrode active material, and the remaining some are the primary particles (or the single particles) of the irreversible positive electrode additive. This structure is distinguished from a core-shell structure having a shell structure in which primary particles of the first positive electrode active material and/or primary particles (single particles) of the irreversible positive electrode additive are coated around a surface of the core of the second positive electrode active material particle.

The particle form of the composite positive electrode active material according to some example embodiments is different from the form in which, conventionally, a lithium iron phosphate-based compound, a lithium manganese-based oxide, and an irreversible positive electrode additive are mixed and present. When, conventionally, a lithium iron phosphate-based compound, lithium manganese-based oxide, and an irreversible positive electrode additive are mixed and used as a positive electrode active material, there may be a challenge in that high-temperature storage characteristics deteriorate due to the creation of spaces between the particles of the lithium iron phosphate-based compound, the particles of the lithium manganese-based oxide, and the particles of the irreversible positive electrode additive as charge and discharge are repeated after the formation of the electrode plate. However, the composite positive electrode active material according to some example embodiments may solve the above challenge by having a particle form including the primary particles of the first positive electrode active material including the lithium iron phosphate-based compound, the primary particles (or single particles) of the second positive electrode active material including the lithium manganese-based oxide, and the primary particles (or the single particles) of the irreversible positive electrode additive, for example, the single secondary particle form in which the primary particles and the primary particles are agglomerated together, and for example, an assembly form.

The composite positive electrode active material particles may have a spherical or elliptical spherical shape by closely agglomerating the primary particles of the first positive electrode active material, the primary particles (or the single particles) of the second positive electrode active material, and the primary particles (or the single particles) of the irreversible positive electrode additive. An average particle diameter, such as the (more specific) average particle diameter D₅₀, of the composite positive electrode active material may be, for example, in a range of about 3 µm to about 20 µm, about 6 µm to about 20 µm, about 6 µm to about 18 µm, about 8 µm to about 18 µm, about 10 µm to about 18 µm, or about 12 µm to about 18 µm. The average particle diameter of the composite positive electrode active material particles may be, for example, obtained by randomly selecting about 30 or 20 composite positive electrode active material particles from an electron microscope image of the composite positive electrode active material, measuring the size of each secondary particle, and calculating an arithmetic mean of the size of each secondary particle, wherein the size of each particle is defined as a diameter in the case of a spherical particle, and as a square root of a product of a major axis length and a minor axis length in the case of a non-spherical particle.

The composite positive electrode active material may include an excess of the first positive electrode active material and the second positive electrode active material. For example, a sum weight value of the first positive electrode active material and the second positive electrode active material may be greater than or equal to about 90 wt%, greater than or equal to about 92 wt%, greater than or equal to about 94 wt%, greater than or equal to about 95 wt%, or greater than or equal to about 96 wt% based on 100 wt% of the composite positive electrode active material.

Amounts of the first positive electrode active material and the second positive electrode active material may be appropriately adjusted based on 100 wt% of the sum weight value of the first positive electrode active material and the second positive electrode active material. For example, the first positive electrode active material may be included in an amount in a range of about 50 wt% to about 99 wt%, about 55 wt% to about 95 wt%, or about 60 wt% to about 90 wt% based on 100 wt% of the first positive electrode active material and the second positive electrode active material, and the second positive electrode active material may be included in an amount in a range of about 1 wt% to about 50 wt%, about 5 wt% to about 45 wt%, or about 10 wt% to about 40 wt% based on 100 wt% of the first positive electrode active material and the second positive electrode active material. If (when) the first positive electrode active material and the second positive electrode active material are included so as to satisfy the above ranges based on 100 wt% of the first positive electrode active material and the second positive electrode active material, the battery may operate at high voltage, and the battery performance, including the initial charge/discharge capacity, efficiency, discharge capacity at low temperature, and high-temperature storage characteristics, may be improved overall.

The irreversible positive electrode additive may be included in an amount equal to the weight% excluding the weight of the first positive electrode active material and the second positive electrode active material from 100 wt% of the composite positive electrode active material. In addition, the irreversible positive electrode additive may be included in an amount in a range of about 0.1 parts by weight to about 10 parts by weight, for example about 0.5 parts by weight to about 8 parts by weight, about 1 part by weight to about 6 parts by weight, about 1 part by weight to about 5 parts by weight, or about 1 part by weight to about 4.5 parts by weight based on 100 parts by weight of the first positive electrode active material and the second positive electrode active material. If (when) the amount of the irreversible positive electrode additive satisfies the above range, the capacity per volume may be increased, and further, the discharge capacity at low temperatures may be improved, and the powder characteristics may be improved, thereby improving the pellet density.

The composite positive electrode active material may further include a carbon coating layer on the particle surface of the composite positive electrode active material. The carbon coating layer may improve electrical conductivity of the composite positive electrode active material and thereby reduce the resistance of the positive electrode including the same. The carbon coating layer may be described in the same way as the carbon coating layer on the surface of the primary particles of the first positive electrode active material of the aforementioned composite positive electrode active material, and is therefore omitted below.

A total number of the primary particles (or the single particles) of the second positive electrode active material and the primary particles (or the single particles) of the irreversible positive electrode additive in particle of the composite positive electrode active material may be 10 or less, for example, 9 or less, 8 or less, 7 or less, or 6 or less, and/or 1 or more, 2 or more, or 3 or more. The number of primary particles (or single particles) of the second positive electrode active material and the primary particles (or the single particles) of the irreversible positive electrode additive in particle of the composite positive electrode active material may be determined by counting the number of particles having a particle size of greater than or equal to about 2 µm within a single composite positive electrode active material particle, wherein the particle size refers to a diameter in the case of spherical particles and to a square root of a product of a major axis length and a minor axis length in the case of non-spherical particles. Here, the total number of the primary particles of the second positive electrode active material and the primary particles of the irreversible positive electrode additive may be an average value of the total number of the primary particles of the second positive electrode active material and the primary particles of the irreversible positive electrode additive in each of a plurality of composite positive electrode active material particles.

A number ratio of the primary particles (or the single particles) of the second positive electrode active material to the primary particles (or the single particles) of the irreversible positive electrode additive in the composite positive electrode active material may be in a range of about 10:1 to about 60:1, for example, about 10:1 to about 40:1, about 15:1 to about 40:1, about 15:1 to about 60:1, or about 40:1 to about 60:1.

The particles of the composite positive electrode active material may include pores therein, and the porosity, which is a ratio of an area occupied by the pores to a cross-sectional area of the composite positive electrode active material particles, may be in a range of about 10% to about 50%, for example, about 10% to about 40%, about 10% to about 30%, or about 10% to about 20%. The porosity may be, for example, obtained by cutting a composite positive electrode active material particle using, e.g., a focused ion beam (FIB), to obtain a cross-section, and measuring a ratio of the area occupied by pores within a cross-section of the composite positive electrode active material particle to a cross-sectional area of the composite positive electrode active material particle using an image analysis program such as, e.g., Image J, on a scanning electron microscope image of the cross-section. A cross-section of the composite positive electrode active materials may be obtained by cutting the composite positive electrode active materials using a focused ion beam (FIB). An image from a scanning electron microscope (SEM) may be acquired, for example, at a magnification of 5,000× to 50,000× under the same imaging conditions. Image analysis may be performed using a fixed threshold value or a consistent threshold-setting method applied equally to all samples. The porosity of the composite positive electrode active materials may be an average value of porosities measured with respect to a plurality of composite positive electrode active materials, and may be, for example, obtained by measuring the porosity of at least 20 individual composite positive electrode active materials and calculating an average value of the porosity at least 20 individual composite positive electrode active materials. If (when) the porosity within the composite positive electrode active material particles satisfies the above range, the primary particles may be filled between the pores within the secondary particles during positive electrode compressing, thereby improving the pellet density or positive electrode density, and thus improving the capacity characteristics and energy density.

A pellet density of the composite positive electrode active material may be greater than or equal to about 2.4 g/cc, and may be in a range of about 2.4 g/cc to about 3 g/cc, about 2.45 g/cc to about 2.9 g/cc, about 2.5 g/cc to about 2.8 g/cc, about 2.55 g/cc to about 2.7 g/cc, or about 2.55 g/cc to about 2.65 g/cc. The pellet density of the composite positive electrode active material may be measured by placing 3 g of the composite positive electrode active material in a mold, maintaining the composite positive electrode active material in the mold at 4 tons for 30 seconds at a temperature of 25°C, measuring the thickness of the pellet, calculating the pellet volume using the thickness of the pellet and the diameter of the mold, and dividing the mass of the composite positive electrode active material by the calculated volume. If (when) the pellet density of the composite positive electrode active material satisfies the above range, powder characteristics may be improved, thereby improving capacity characteristics. The pellet density of the composite positive electrode active material can be improved when the porosity within the composite positive electrode active material particles satisfies the above range, so that primary particles fill between the pores during compressing.

### Method for Preparing Composite Positive Electrode Active Material

A method for preparing a composite positive electrode active material according to some example embodiments includes preparing a first positive electrode active material including a lithium iron phosphate-based compound in a form of primary particles, mixing and wet milling (or wet dispersing) the first positive electrode active material, a second positive electrode active material including a lithium manganese-based oxide in a form of secondary particles in which a plurality of primary particles are agglomerated (or in a form of single particles), and an irreversible positive electrode additive including lithium cobalt-based oxide in a form of primary particles (or single particles) to prepare a first slurry, and adding the first slurry to a spray dryer and spray drying the first slurry to prepare a first dried product.

The composite positive electrode active material may be prepared according to the above-described preparing method.

In some example embodiments, the first positive electrode active material includes a low-cost lithium iron phosphate-based compound to secure price competitiveness, and further includes a lithium manganese-based oxide that may be used at high voltages and is relatively low-cost compared to the lithium iron phosphate-based compound, and further includes an irreversible positive electrode additive in the form of primary particles (or single particles), so that the primary particles of the first positive electrode active material, primary particles (or single particles) of the second positive electrode active material, and primary particles (or single particles) of the irreversible positive electrode additive are agglomerated to form a single secondary particle form, a type of assembly form, so that charge/discharge capacity and efficiency at high voltage, low-temperature discharge capacity, and cycle-life characteristics are improved, and the pellet density is improved due to improved powder characteristics, and at the same time, the capacity per volume may be greatly increased.

Hereinafter, a method for preparing a composite positive electrode active material according to some example embodiments is described. In the preparing method below, terms expressed using "first" and "second" in addition to the first positive electrode active material and the second positive electrode active material are expressed to identify the process of preparing a composite positive electrode active material using the first positive electrode active material, the second positive electrode active material, and the irreversible positive electrode additive and the process of preparing the first positive electrode active material, respectively. For example, in order to identify terms such as slurry commonly used in the process of preparing a composite positive electrode active material using the first positive electrode active material, the second positive electrode active material, and the irreversible positive electrode additive and in the process of preparing the first positive electrode active material, the slurry in the process of preparing the composite positive electrode active material using the first positive electrode active material, the second positive electrode active material, and the irreversible positive electrode additive may be indicated as "first slurry," and the slurry in the process of preparing the first positive electrode active material may be indicated as "second slurry."

For convenience, in the order described in the claims, the process of preparing a composite positive electrode active material using the first positive electrode active material, the second positive electrode active material, and the irreversible positive electrode additive is expressed as "first," and the process of preparing the first positive electrode active material is expressed as "second." However, it should be understood that "first" and "second" do not indicate the order between them.

### Preparing First Positive Electrode Active Material

The above process is a process for preparing a first positive electrode active material including a lithium iron phosphate-based compound in a form of primary particles. In the above process, the first positive electrode active material including the lithium iron phosphate-based compound in the form of primary particles may be prepared according to the method described below, or a commercially available product may be obtained and used.

The preparing of the first positive electrode active material including the lithium iron phosphate-based compound in the form of primary particles may include wet milling an iron phosphate-based precursor, a lithium raw material, and a carbon raw material mixed in a second solvent to prepare a second slurry, adding the wet-milled second slurry to a spray dryer and spray-drying the wet-milled second slurry to prepare a second dried product, firing the second dried product to prepare a second fired product, and pulverizing the second fired product. Hereinafter, the steps for preparing the first positive electrode active material are sequentially described.

First, the second slurry may be prepared by mixing an iron phosphate-based precursor, a lithium raw material, and a carbon raw material in a second solvent and wet milling the mixture. The preparing of the second slurry may include mixing an iron phosphate-based precursor and a lithium raw material to prepare a raw material mixture, preparing a carbon raw material, and mixing the raw material mixture and the carbon raw material, adding a second solvent, and performing wet milling to prepare a second slurry. A mixing weight ratio of the raw material mixture and the carbon raw material may be, for example, in a range of about 5:5 to about 99:1, about 6:4 to about 99:1, about 7:3 to about 99:1, about 8:2 to about 99:1, or about 9:1 to about 99:1.

The iron phosphate-based precursor may be an iron phosphate precursor such as iron phosphate (FePO₄) and iron(II) phosphate (Fe₃(PO₄)₂), or may be formed by adding a phosphorus raw material such as phosphoric acid (H₃PO₄), ammonium dihydrogen phosphate (NH₄H₂PO₄), diammonium hydrogen phosphate ((NH₄)₂HPO₄), or trisodium phosphate (Na₃PO₄) to an iron raw material such as iron trioxide (Fe₂O₃), iron oxalate (FeC₂O₄), or iron hydroxide (Fe(OH)₃). In addition, the iron phosphate-based precursor may be a manganese iron phosphate precursor formed by adding a manganese raw material such as manganese oxide, manganese carbonate, manganese sulfate, or manganese nitrate to the iron phosphate precursor. The iron phosphate-based precursor may be used without limitation as long as the iron phosphate-based precursor is a known material used in solid-phase reaction (e.g., polymerization).

The lithium raw material may be or include, for example, Li₂CO₃, LiOH, a hydrate thereof, or a combination thereof.

The carbon raw material may include glucose, sucrose, lactose, starch, oligosaccharide, polyoligosaccharide, fructose, cellulose, poly(furfuryl alcohol), polyethylene glycol, a block copolymer of ethylene and ethylene oxide, a vinyl-based resin, a cellulose-based resin, a phenolic resin, a pitch-based resin, a tar-based resin, or a combination (e.g., a polymer) thereof. For example, as the carbon raw materials, a mixture of glucose and polyethylene glycol may be used, and a mixing ratio by weight is not specifically limited but may be, for example, from about 10:90 to about 90:10, from about 20:80 to about 80:20, from about 30:70 to about 70:30, from about 40:60 to about 60:40, or from about 50:50.

The wet milling may be performed by adding a second solvent, and the second solvent may be or include any one or more of ethylene glycol (EG), diethylene glycol (DEG), triethylene glycol (TEG), tetraethylene glycol (TetraEG), propylene glycol (PG), polyethylene glycol (PEG), polypropylene glycol (PPG), ethanol, water, and acetone. For example, the first solvent may be or include a polyol solvent that induces a reducing atmosphere, either alone or as a mixed solvent in which the polyol solvent is mixed with water, acetone, ethanol, or a combination thereof.

The wet milling may be performed using bead mill, ball mill, vibration mill, or colloid mill equipment. For example, in some embodiments, the wet milling may be performed using a ball milling method with zirconia balls, wherein the wet milling may be conducted by rotating a milling container at a rotational speed of from about 50 rpm to about 2000 rpm for about 1 hour to about 10 hours.

In the preparing of the second slurry by wet milling, a raw material including Al, Ca, Ce, Cr, Cu, La, Mg, Mn, Mo, Nb, Ni, Sn, Sr, Ti, V, W, Y, Zn, Zr, or a combination thereof may be further added to the slurry. A raw material including Al, Mg, Mn, Ti, V, or a combination thereof may be added. The raw material including Al, Mg, Ti, V, or the combination thereof may be further added as a type of doping element, and the Al, Mg, Ti, V, or the combination thereof may be added in an amount from about 0.1 mol% to about 0.5 mol%, from about 0.2 mol% to about 0.5 mol%, from about 0.3 mol% to about 0.5 mol%, or about 0.4 mol%, based on a total metal, excluding lithium, in the lithium iron phosphate-based compound of the first positive electrode active material. A raw material containing Ti may be further added to the second slurry, and the amount of Ti may be added so as to be from about 0.1 mol% to about 0.5 mol%, from about 0.2 mol% to about 0.5 mol%, from about 0.3 mol% to about 0.5 mol%, or about 0.4 mol%, based on a total metal, excluding lithium, in the first positive electrode active material. Accordingly, the rate characteristics and cycle-life characteristics may be improved for the rechargeable lithium battery.

Next, the wet-milled second slurry may be added to a spray dryer and spray-dried to produce a second dried product.

The wet-milled second slurry may be injected into a spray dryer and sprayed to generate droplets containing a desired uniform, or substantially uniform composition, and then the formed droplets may be dried to produce a second dried product.

The spray dryer may include an ultrasonic spray device, one- and two-fluid air nozzle spray device, an ultrasonic nozzle spray device, a filter expansion droplet generator (FEAG), and a disk-type droplet generator, and any known spray dryer may be used without limitation.

An amount of the second slurry added may vary depending on the spray dryer but may be appropriately adjusted. In some embodiments, drying takes place with a blower speed of about 50 Hz and an addition pressure of about 0.5 MPa, an addition speed of the second slurry may be less than or equal to about 1 kg/min, for example, less than about 1 kg/min, less than or equal to about 0.9 kg/min, less than or equal to about 0.8 kg/min, less than or equal to about 0.7 kg/min, less than or equal to about 0.6 kg/min, or less than or equal to about 0.5 kg/min, and greater than or equal to about 0.01 kg/min, greater than or equal to about 0.05 kg/min, greater than or equal to about 0.1 kg/min, greater than or equal to about 0.15 kg/min, greater than or equal to about 0.2 kg/min, greater than or equal to about 0.3 kg/min, or greater than or equal to about 0.4 kg/min. The addition speed of the second slurry is a value converted on a solid content basis, and is defined as an amount of the second slurry supplied per minute (min) based on a mass of solid content in the second slurry. When the addition speed of the second slurry added to the spray dryer satisfies the above ranges, secondary particles composed of primary particles, each having a uniform size, may be produced, and the average size of the primary particles may be adjusted to less than or equal to about 200 nm, and a size of the secondary particles may also be uniformly controlled.

The spray drying may be performed at a temperature greater than or equal to about 100 °C, for example, at a temperature in a range of about 150 °C to about 400 °C, about 150 °C to about 300 °C, or about 200 °C to about 250 °C for drying the components and evaporating the solvent.

Next, the second dried product may be fired to produce a second fired product.

In the preparing of the second fired product, the firing may be performed under vacuum or inert gas and at a temperature in a range of about 700 °C to about 1000 °C, for example, about 725 °C to about 900 °C, or about 750 °C to about 800 °C. The inert gas may be or include argon, nitrogen, and the like.

The second fired product may be in the form of secondary particles in which a plurality of primary particles is agglomerated. More specifically, the secondary particles of the second fired product may have a spherical or ellipsoidal geometry as the primary particles are closely agglomerated with each other. An average particle diameter, such as the (more specific) average particle diameter D₅₀, of the secondary particles may be, for example, from about 3 µm to about 20 µm, from about 5 µm to about 18 µm, or from about 7 µm to about 15 µm. The average particle diameter of the secondary particles may be obtained by randomly selecting about 30 or 20 secondary particles from an electron microscope image of the second fired product, measuring the size of each secondary particle, and calculating an arithmetic mean of the size of each secondary particle, wherein the size of each particle is defined as a diameter in the case of a spherical particle, and as a square root of a product of a major axis length and a minor axis length in the case of a non-spherical particle.

The second fired product may include pores therein, and the porosity may be in a range of about 10% to about 50%, for example, about 10% to about 40%, or about 10% to about 30%. The porosity may be, for example, the ratio of the area occupied by the pores within the secondary particles to the cross-sectional area of the secondary particles of the second fired product measured using an image analysis program such as, e.g., Image J, in a scanning electron microscope image of the cross-section of the secondary particles of the second fired product. A cross-section of the secondary particles may be obtained by cutting the second fired product using a focused ion beam (FIB). An image from a scanning electron microscope (SEM) may be acquired, for example, at a magnification of 5,000× to 50,000× under the same imaging conditions. Image analysis may be performed using a fixed threshold value or a consistent threshold-setting method applied equally to all samples. The porosity of the second fired products may be an average value of porosities measured with respect to a plurality of the second fired products, and may be, for example, obtained by measuring the porosity of at least 20 individual second fired products and calculating an average value of the porosity at least 20 individual second fired products.

The second fired product may further include a carbon coating layer on the surfaces of the secondary particles, the surfaces of the primary particles constituting the secondary particles, or the surfaces of both. If (when) the second fired product is later pulverized to prepare the first positive electrode active material of primary particles, the carbon coating layer may improve the electrical conductivity of the first positive electrode active material and may lower the resistance of the positive electrode. The carbon coating layer may be formed by a firing process of the above-mentioned carbon raw materials.

Next, the second fired product may be pulverized.

The pulverizing may be performed in equipment such as a jet mill, ball mill, bead mill, sand mill, and the like, and known devices may be used without limitation.

The pulverization speed during the above pulverizing is not specifically limited as long as the second fired product in the form of an assembly is separated into primary particles constituting the assembly, but for example, the pulverizing may be performed at a pulverization speed exceeding about 2000 rpm, and for example, may be performed at a pulverization speed in a range of about 3000 rpm to about 6000 rpm, or about 4000 rpm to about 6000 rpm. The pulverization of the above second fired product may be performed under conditions where the secondary particles may be pulverized and separated into a plurality of primary particles. If (when) the pulverization speed is less than 2000 rpm, the secondary particles may not be pulverized and may exist in the form of an assembly. If (when) the pulverization speed is greater than about 6000 rpm, the pulverized and separated primary particles may be damaged.

By the pulverization process of the second fired product, the first positive electrode active material including the lithium iron phosphate-based compound in the form of primary particles may be prepared. In the above step, the first positive electrode active material prepared according to the aforementioned method may be used. The first positive electrode active material including the lithium iron phosphate-based compound may be described in the same manner as described above, and is therefore omitted below.

### Preparing First Slurry

The above process is a process of mixing and wet milling (or wet dispersing) the first positive electrode active material, the second positive electrode active material including the lithium manganese-based oxide in the form of secondary particles in which a plurality of primary particles (or single particles) are agglomerated, and the irreversible positive electrode additive including lithium cobalt-based oxide in the form of primary particles (or single particles) to prepare a first slurry. The contents of the first positive electrode active material, the second positive electrode active material, and the irreversible positive electrode additive may be described in the same manner as described above, and are therefore omitted below.

The second positive electrode active material is in a secondary particle form in which a plurality of primary particles (or single particles) are aggregated, and the average particle diameter of the secondary particles of the second positive electrode active material may be 2 µm to 10 µm, 3 µm to 10 µm, 4 µm to 10 µm, 5 µm to 10 µm, 6 µm to 10 µm, 7 µm to 10 µm, or 8 µm to 10 µm.

The average particle diameter of the secondary particles of the second positive electrode active material may be obtained, for example, by selecting 20 particles in a scanning electron microscopy (SEM) image of the secondary particles of the second positive electrode active material, measuring the particle size (in the case of spherical particles, diameter; in the case of non-spherical particles, the square root of the product of the major axis length and the minor axis length), and calculating the arithmetic mean thereof.

The detailed descriptions of the first positive electrode active material, the second positive electrode active material, and the irreversible positive electrode additive are the same as those described above and are therefore omitted below.

The method of mixing the first positive electrode active material, the second positive electrode active material, and the irreversible positive electrode additive is not particularly limited, and for example, a mixer may be used.

A mixing weight ratio of the first positive electrode active material and the second positive electrode active material may be in a range of about 50:50 to about 99:1, about 55:45 to about 95:5, or about 60:40 to about 90:10. When the mixing weight ratio of the first positive electrode active material and the second positive electrode active material satisfies the above range, operation at high voltage is possible while securing price competitiveness, and charge/discharge efficiency, low-temperature discharge capacity, cycle-life characteristics, and high-temperature storage characteristics may be improved, and powder characteristics may be improved, so that pellet density may be improved. In addition, when a second positive electrode active material having a relatively large average particle diameter, such as the (more specific) average particle diameter D₅₀, is included in an excessive amount, it is challenging to properly perform spray drying, and even if (when) spray drying is performed, it may be challenging to form an assembly in some example embodiments.

The irreversible positive electrode additive may be added in an amount in a range of about 0.1 parts by weight to about 10 parts by weight, for example about 0.5 parts by weight to about 8 parts by weight, about 1 part by weight to about 6 parts by weight, about 1 part by weight to about 5 parts by weight, or about 1 part by weight to about 4.5 parts by weight based on 100 parts by weight of the first positive electrode active material and the second positive electrode active material. When the amount of the irreversible positive electrode additive satisfies the above range, the capacity per volume may be increased, and further, the discharge capacity at low temperatures may be improved, and the powder characteristics may be improved, thereby improving the pellet density.

The first slurry may be prepared by adding a first solvent to the first positive electrode active material, the second positive electrode active material, and the irreversible positive electrode additive during wet milling (or wet dispersing), and the specific type of the first solvent is as described for the second solvent. The wet milling (or wet dispersing) may be performed using a method such as ultrasonic dispersion, stirring dispersion, homogenizer, high-shear mixer, jet mill, ball milling, bead milling, and the like, and is not specifically limited as long as the wet milling (or wet dispersing) is a method for wet milling (or wet dispersing) the first positive electrode active material, the second positive electrode active material, and the irreversible positive electrode additive. For example, in some embodiments, the wet milling may be performed using a ball milling method with zirconia balls, wherein the wet milling may be conducted by rotating a milling container at a rotational speed of from about 10 rpm to about 100 rpm for about 10 minutes to about 3 hours.

In this process, the secondary particles of the second positive electrode active material may be separated into primary particles (or single particles), and may constitute a composite positive electrode active material prepared through a subsequent spray drying process. The average particle diameter of the primary particles (or single particles) of the second positive electrode active material constituting the composite positive electrode active material is as described above, and thus a detailed description thereof is omitted below.

### Preparing First Dried Product

The above step is a process of preparing a first dried product by adding the first slurry to a spray dryer and spray drying the first slurry.

The first slurry may be added to a spray dryer and sprayed to generate droplets including a desired uniform or substantially uniform composition, and then the formed droplets may be dried to prepare a first dried product. In this case, the solvent in the droplets evaporates, and the remaining solids may be dried into a particle form.

The spray dryer may include, e.g., an ultrasonic spray device, one- and two-fluid air nozzle spray device, an ultrasonic nozzle spray device, a filter expansion droplet generator (FEAG), and a disk-type droplet generator, and any known spray dryer may be used without limitation.

An amount of the first slurry added may vary depending on the spray dryer, but may be appropriately adjusted. For example, the addition speed of the first slurry may be less than or equal to about 1 kg/min, for example, less than about 1 kg/min, less than or equal to about 0.9 kg/min, less than or equal to about 0.8 kg/min, less than or equal to about 0.7 kg/min, less than or equal to about 0.6 kg/min, or less than or equal to about 0.5 kg/min, and greater than or equal to about 0.01 kg/min, greater than or equal to about 0.05 kg/min, greater than or equal to about 0.1 kg/min, greater than or equal to about 0.15 kg/min, greater than or equal to about 0.2 kg/min, greater than or equal to about 0.3 kg/min, or greater than or equal to about 0.4 kg/min. The addition speed of the first slurry is a value converted on a solid content basis, and is defined as an amount of the first slurry supplied per minute (min) based on a mass of solid content in the first slurry. If (when) the addition speed of the first slurry added to the spray dryer satisfies the above range, the drying efficiency is improved, a powder having a narrow particle size distribution and a relatively uniform, or substantially uniform, shape may be formed, and clogging and contamination inside the dryer may be reduced or prevented.

The spray drying may be performed at a temperature greater than or equal to about 100 °C for drying the components and evaporating the solvent, and may be performed at a temperature in a range of, for example, about 150 °C to about 400 °C, about 150 °C to about 300 °C, or about 200 °C to about 250 °C.

The first dried product obtained according to the above steps may have a particle form including primary particles of the first positive electrode active material, primary particles (or single particles) of the second positive electrode active material, and primary particles (single particles) of the irreversible positive electrode additive, and for example, may have a form of secondary particles in which the primary particles of the first positive electrode active material, the primary particles (or the single particles) of the second positive electrode active material, and the primary particles (or the single particles) of the irreversible positive electrode additive are agglomerated, wherein the secondary particles may be expressed as an assembly. The first dried product may correspond to or be identical to the composite positive electrode active material in the present specification.

The method for preparing the composite positive electrode active material may further include firing the first dried product to prepare a first fired product, after the adding of the first slurry to the spray dryer and spray drying the same to prepare a first dried product. The preparing of the first fired product may be expressed as a first firing step to distinguish it from spray drying and firing the second slurry. The composite positive electrode active material may be further strengthened by performing a first firing step after spray drying, thereby further stabilizing the crystal structure and significantly improving the electrochemical characteristics, mechanical strength, and cycle-life stability of the composite positive electrode active material.

The first firing step may be performed under vacuum or inert gas and at a temperature in a range of about 300 °C to about 1000 °C, for example, about 300 °C to about 500 °C, or about 350 °C to about 450 °C. The inert gas may be or include argon, nitrogen, and the like. If (when) the above firing temperature satisfies the above range, electrochemical characteristics, mechanical strength, and cycle-life stability may be greatly improved.

The first fired product may have a particle form including the primary particles of the first positive electrode active material, the primary particles (or the single particles) of the second positive electrode active material, and the primary particles (or the single particles) of the irreversible positive electrode additive and may have a form of secondary particles or an assembly form in which, for example, the primary particles of the first positive electrode active material, the primary particles (or the single particles) of the second positive electrode active material, and the primary particles (or the single particles) of the irreversible positive electrode additive are agglomerated. The first fired product may also correspond to the composite positive electrode active material in the present specification, or may be the same.

In the case of the composite positive electrode active material prepared according to the manufacturing method of the composite positive electrode active material according to an embodiment, overall battery performance is excellent, and high-temperature storage characteristics may be improved compared to a conventional simple mixing method.

### Rechargeable Lithium Battery

A rechargeable lithium battery according to some example embodiments includes a positive electrode including a positive electrode current collector, and a positive electrode active material layer disposed on the positive electrode current collector and including the aforementioned composite positive electrode active material, a negative electrode, and an electrolyte. The rechargeable lithium battery may include a positive electrode, a negative electrode, a separator between the positive electrode and the negative electrode, and an electrolyte.

The rechargeable lithium battery according to some example embodiments may have an overall improved battery performance by including the aforementioned composite positive electrode active material, and for example, may have improved charge/discharge capacity and efficiency thereof, low-temperature discharge capacity, and cycle-life characteristics while securing price competitiveness and increasing average voltage, and may have improved powder characteristics, thereby improving pellet density and significantly increasing capacity per volume.

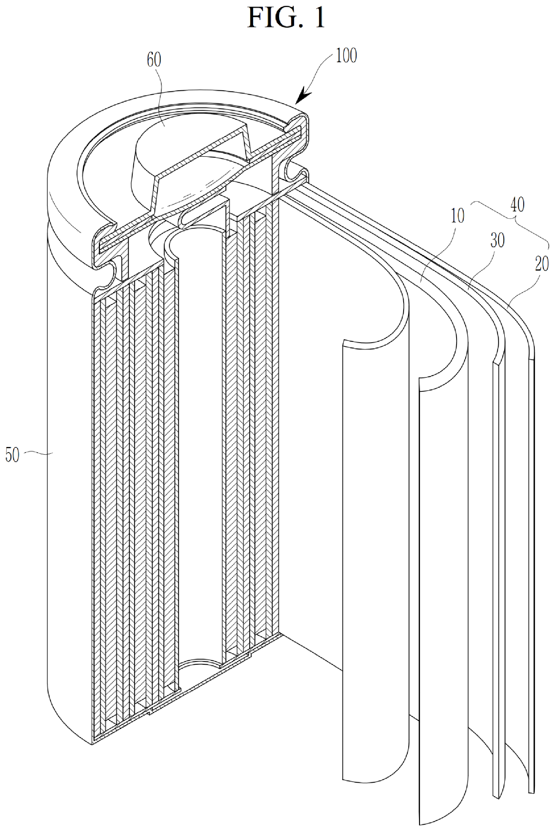

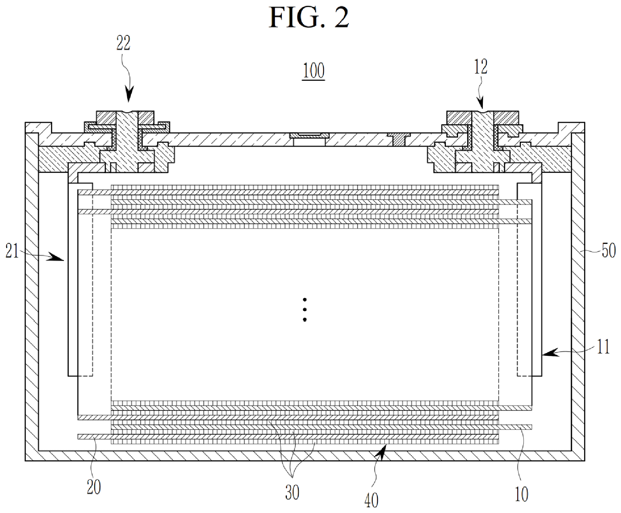

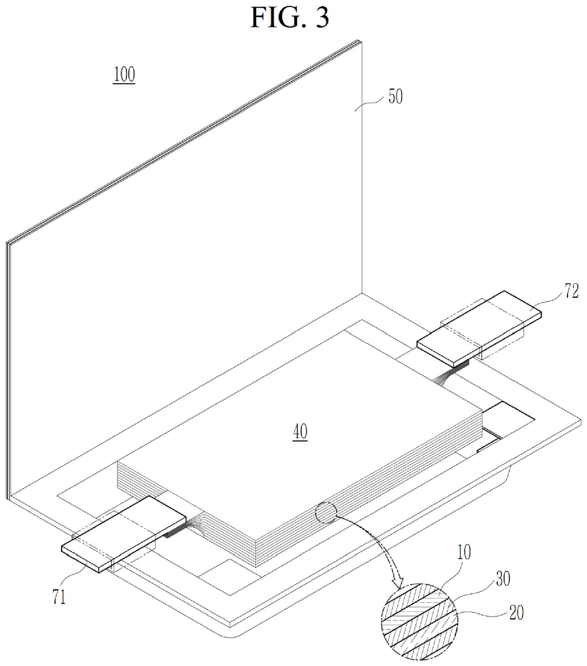

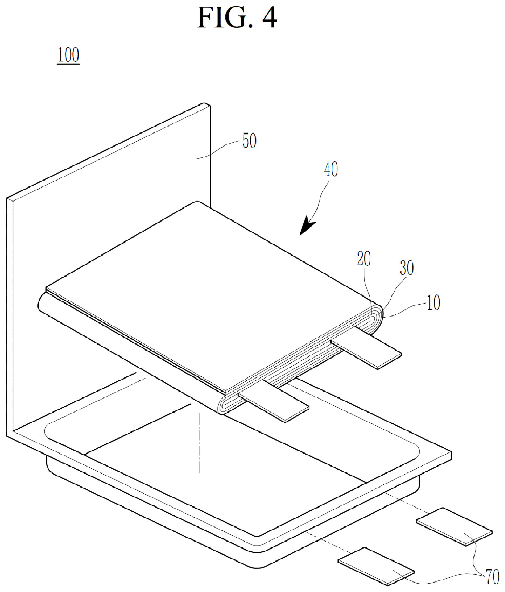

The rechargeable lithium battery may be classified into cylindrical, prismatic, pouch-shaped, coin-shaped, and the like depending on their shapes. For example, FIG. 1 is a schematic view showing a cross-section of a cylindrical rechargeable lithium battery cut along a vertical axis and an electrode assembly 40 extending therefrom, FIG. 2 is a cross-sectional view of a prismatic rechargeable lithium battery, and FIG. 3 and FIG. 4 are schematic exploded perspective views of pouch-type rechargeable lithium batteries. Referring to FIG. 1 to FIG. 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1.

In FIG. 2, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. The rechargeable lithium battery 100 may include an electrode tab 70 illustrated in FIG. 4 that constitutes an electrical path for conducting current formed in an electrode assembly 40 to the outside of the rechargeable lithium battery 100. For example, the electrode tab 70 may be disposed in the same direction as illustrated in FIG. 4, or the positive electrode tab 71 and the negative electrode tab 72 may be disposed in opposite directions as illustrated in FIG. 3.

### Positive Electrode

The positive electrode current collector is not particularly limited as long as the positive electrode current collector has conductivity and does not cause an adverse chemical change in the rechargeable lithium battery, and may be or include an aluminum foil or a stainless steel foil having a thickness in a range of about 10 µm to about 15 µm.

The positive electrode active material layer includes the aforementioned composite positive electrode active material. The specific details of the composite positive electrode active material may be described in the same manner as described above, and are therefore omitted below.

An amount of the composite positive electrode active material may be in a range of about 60 wt% to about 99.9 wt%, about 70 wt% to about 99.8 wt%, about 80 wt% to about 99 wt%, or about 90 wt% to about 98 wt% based on 100 wt% of the positive electrode active material layer.

The positive electrode active material layer may optionally further include a binder, a conductive material, or a combination thereof.

The binder may adhere the composite positive electrode active material particles to each other, and may also adhere the composite positive electrode active material to the positive electrode current collector. Examples of the binder may include at least one of polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, polyester resin, nylon, and the like, but are not limited thereto.

The conductive material is included to provide electrode conductivity, and any electrically conductive material may be used as a conductive material unless the electrically conductive material causes an adverse chemical change in a battery. Examples of the conductive material may include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

In the positive electrode active material layer, an amount of the binder may be in a range of about 0.1 wt% to about 5 wt% based on 100 wt% of the positive electrode active material layer, and an amount of the conductive material may be in a range of about 0.1 wt% to about 5 wt% based on 100 wt% of the positive electrode active material layer.

The positive electrode active material layer may further include other positive electrode active materials within a range that does not impede the purpose of the present disclosure in addition to the aforementioned components.

In addition to the aforementioned composite positive electrode active material, the positive electrode active material layer may further include a positive electrode active material having a form of primary particles and including the aforementioned lithium iron phosphate-based compound (hereinafter, "third positive electrode active material"), a positive electrode active material having a form of primary particles and including the aforementioned lithium cobalt-based composite oxide (hereinafter, "fourth positive electrode active material"), and/or an irreversible positive electrode additive having a form of primary particles (or single particles) and including the aforementioned lithium cobalt-based oxide (hereinafter, "second irreversible positive electrode additive"). Here, the third positive electrode active material, the fourth positive electrode active material, and/or the second irreversible positive electrode additive may each independently be those in which the first positive electrode active material, the second positive electrode active material, and/or the irreversible positive electrode additive included in the composite positive electrode active material are not assembled and are present in a separated state. In this case, the average particle diameter of the primary particles of the third positive electrode active material may be the same as described above for the first positive electrode active material, the average particle diameter of the primary particles (or the single particles) of the fourth positive electrode active material may be the same as described above for the second positive electrode active material, and the average particle diameter of the primary particles (or the single particles) of the second irreversible positive electrode additive may be the same as described above for the irreversible positive electrode additive. Here, the third positive electrode active material, the fourth positive electrode active material, and/or the second irreversible positive electrode additive are present in a non-aggregated, separated state without being agglomerated with the above-described composite positive electrode active material to form an assembled structure.

If (when) the positive electrode active material layer further includes the third positive electrode active material, the fourth positive electrode active material, and/or the second irreversible positive electrode additive in addition to the composite positive electrode active material, a weight ratio of the composite positive electrode active material to the third positive electrode active material, the fourth positive electrode active material, the second irreversible positive electrode additive, or a combination thereof may be in a range of about 1:9 to about 9:1, and may be appropriately added as desired. In this case, the third positive electrode active material may further include the aforementioned carbon coating layer on the surface of the primary particles, and because the specific details of the carbon coating layer are as described above, they are omitted below.

### Negative Electrode

A negative electrode for a rechargeable lithium battery may include a negative electrode current collector and a negative electrode active material layer on the negative electrode current collector. The negative electrode active material layer includes a negative electrode active material, and may optionally further include a binder, a conductive material, or a combination thereof.

The negative electrode current collector is not particularly limited as long as the negative electrode current collector has conductivity without causing adverse chemical changes in the rechargeable lithium battery, and may be or include a copper foil having a thickness in a range of about 10 µm to about 15 µm.

The negative electrode active material includes at least one of a material capable of reversibly intercalating/deintercalating lithium ions, lithium metal, an alloy of lithium metal, a material capable of doping and dedoping lithium, or a transition metal oxide.

The material capable of reversibly intercalating/deintercalating the lithium ions may be or include a carbon-based negative electrode active material, for example, crystalline carbon, amorphous carbon, or a combination thereof. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

As the alloy of lithium metal, an alloy of lithium and a metal such as or including at least one of Na, K, Rb, Cs, Fr, Be, Mg, Ca, Sr, Si, Sb, Pb, In, Zn, Ba, Ra, Ge, Al, and Sn may be used.

The material capable of doping and/or dedoping lithium may be or include a Si-based negative electrode active material or a Sn-based negative electrode active material. The Si-based negative electrode active material may be or include at least one of silicon, a silicon-carbon composite, SiOₓ (0<x≤2), a Si-Q alloy (wherein Q is or includes at least one of an alkali metal, an alkaline earth metal, a Group 13 element, a Group 14 element (excluding Si), a Group 15 element, a Group 16 element, a transition metal, a rare earth element, and a combination thereof, and may be, for example, at least one of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be or include at least one of Sn, SnO₂, a Sn alloy, or a combination thereof.

The silicon-carbon composite may be or include a composite of silicon and amorphous carbon. The average particle diameter (D₅₀) of the silicon-carbon composite particles may be, for example, in a range of about 0.5 µm to about 20 µm. According to some example embodiments, the silicon-carbon composite may be in the form of silicon particles and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core. The crystalline carbon may be or include artificial graphite, natural graphite, or a combination thereof. The amorphous carbon may include at least one of soft carbon or hard carbon, a mesophase pitch carbonized product, calcined coke, and the like.

When the silicon-carbon composite includes silicon and amorphous carbon, an amount of the silicon may be in a range of about 10 wt% to about 50 wt%, and an amount of the amorphous carbon may be in a range of about 50 wt% to about 90 wt% based on 100 wt% of the silicon-carbon composite. In addition, when the silicon-carbon composite includes silicon, amorphous carbon, and crystalline carbon, an amount of silicon may be in a range of about 10 wt% to about 70 wt%, an amount of crystalline carbon may be in a range of about 1 wt% to about 60 wt%, and an amount of amorphous carbon may be in a range of about 15 wt% to about 50 wt% based on 100 wt% of the silicon-carbon composite.

For example, a thickness of the amorphous carbon coating layer may be in a range of about 5 nm to about 100 nm. An average particle diameter (D₅₀) of the silicon particles (primary particles) may be in a range of about 10 nm to about 1 µm, or about 10 nm to about 200 nm. The silicon particles may be present as silicon alone, in the form of a silicon alloy, or in an oxidized form. The oxidized form of the silicon may be represented as SiOₓ (0<x≤2). At this time, the atomic content ratio of Si:O, which indicates the degree of oxidation, may be in a range of about 99:1 to about 33:67. As used herein, the (more specific) average particle diameter D₅₀ indicates a diameter of particle where a cumulative volume is about 50 vol% in a particle size distribution.

The Si-based negative electrode active material or Sn-based negative electrode active material may be mixed with the carbon-based negative electrode active material. When using a mixture of a Si-based negative electrode active material or a Sn-based negative electrode active material and a carbon-based negative electrode active material, the mixing ratio may be in a range of about 1:99 to about 90:10 by weight.

The negative electrode active material may be included in an amount in a range of about 90 wt% to about 99.8 wt%, or about 94 wt% to about 99 wt%, based on 100 wt% of the negative electrode active material layer.

The binder adheres the negative electrode active material particles to each other, and also adheres the negative electrode active material to the negative electrode current collector. The binder may be or include a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be or include at least one of Na, K, or Li.

The dry binder may be or include a polymer material capable of becoming fiber, and may be or include, for example, polytetrafluoroethylene, polyvinylidene fluoride, a polyvinylidene fluoride-hexafluoropropylene copolymer, polyethylene oxide, or a combination thereof.

The conductive material is included to provide electrode conductivity, and any electrically conductive material may be used as a conductive material unless the electrically conductive material causes an adverse chemical change. Examples of the conductive material include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

An amount of the binder may be in a range of about 0.1 wt% to about 5 wt% based on 100 wt% of the negative electrode active material layer, and an amount of the conductive material may be in a range of about 0.1 wt% to about 5 wt% based on 100 wt% of the negative electrode active material layer.

### Electrolyte

For example, an electrolyte for a rechargeable lithium battery is an electrolyte solution and includes a non-aqueous organic solvent and a lithium salt.

The non-aqueous organic solvent constitutes a medium for transmitting ions taking part in the electrochemical reaction of a battery. The non-aqueous organic solvent may be or include a carbonate-based solvent, an ester-based solvent, an ether-based solvent, a ketone-based solvent, an alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, t-butyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. The ketone-based solvent may include cyclohexanone, and the like. The alcohol-based solvent may include at least one of ethanol, isopropyl alcohol, and the like. The aprotic solvent may include at least one of nitriles such as R-CN (wherein R is a C2 to C20 linear, branched, or cyclic hydrocarbon group, and may include a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent may be used alone, or in combination of two or more solvents, and when two or more types are used in combination, the mixing ratio may be appropriately adjusted depending on intended battery performances, which is widely understood by those working in the relevant field.

When using a carbonate-based solvent, a cyclic carbonate and a chain carbonate may be mixed together, and the cyclic carbonate and the chain carbonate may be mixed in a volume ratio in a range of about 1:1 to about 1:9.

The non-aqueous organic solvent may further include an aromatic hydrocarbon-based organic solvent. For example, a carbonate-based solvent and an aromatic hydrocarbon-based organic solvent may be mixed together in a volume ratio in a range of about 1:1 to about 30:1.

The electrolyte solution may further include at least one of vinylethylene carbonate, vinylene carbonate, or an ethylene carbonate-based compound to improve battery cycle-life.

Examples of the ethylene carbonate-based compound may include at least one of fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the non-aqueous organic solvent supplies lithium ions in a battery, enables a basic operation of a rechargeable lithium battery, and improves transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₂C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers in a range of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range in a range of about 0.1 M to about 2.0 M. When the concentration of lithium salt is within the above range, the electrolyte solution has appropriate ionic conductivity and viscosity, and thus desired or improved performance can be achieved and lithium ions can move effectively.

### Separator

Depending on the type of rechargeable lithium battery, a separator may exist between the positive and negative electrodes. For example, the separator may include at least one of polyethylene, polypropylene, polyvinylidene fluoride, or a multilayer film of two or more layers, and may of course be a mixed multilayer film such as a polyethylene/polypropylene two-layer separator, a polyethylene/polypropylene/polyethylene three-layer separator, or a polypropylene/polyethylene/polypropylene three-layer separator.

The separator may include a porous substrate and a coating layer including an organic material, an inorganic material, or a combination thereof on one or both surfaces of the porous substrate.

The porous substrate may be or include a polymer film formed of or including any one polymer such as or including at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, and polytetrafluoroethylene (e.g., TEFLON^{®}), or a copolymer or mixture of two or more thereof. The porous substrate may be formed of glass fibers, or may be a membrane in which the polymer and glass fibers are mixed.

The porous substrate may have a thickness in a range of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles including at least one of Al₂O₃, SiO₂, TiO₂, SnO₂, CeO₂, MgO, NiO, CaO, Ga₂O₃, ZnO, ZrO₂, Y₂O₃, SrTiO₃, BaTiO₃, Mg(OH)₂, boehmite, and a combination thereof, but is not limited thereto. An average particle diameter (D₅₀) of the inorganic particles may be in a range of about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked together.

A thickness of the coating layer may be in a range of about 0.5 µm to about 20 µm, for example, about 1 µm to about 10 µm, or about 1 µm to about 5 µm.

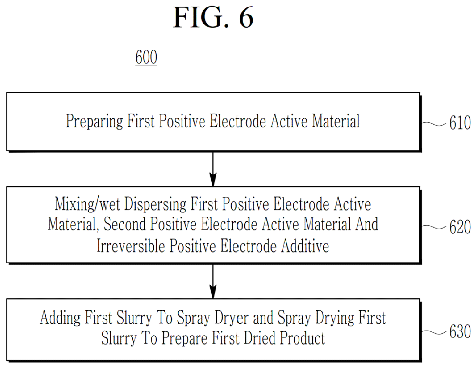

FIG. 6 is a flowchart illustrating a method of preparing a composite positive electrode active material, according to an example embodiment. In FIG. 6, the method 600 includes operation 610, which includes preparing a first positive electrode active material including a lithium iron phosphate-based compound in a form of primary particles. Operation 620 includes mixing and wet milling (or wet dispersing) the first positive electrode active material, a second positive electrode active material including a lithium manganese-based oxide in a form of primary particles (or single particles), and an irreversible positive electrode additive including lithium cobalt-based oxide in a form of primary particles (or single particles) to prepare a first slurry. Operation 630 includes adding the first slurry to a spray dryer and spray drying the first slurry to prepare a first dried product. In an example, the method 600 further includes first firing the first dried product to prepare a first fired product, after the adding the first slurry to a spray dryer and spray drying the first slurry to prepare a first dried product.

Hereinafter, examples and comparative examples of the present disclosure are described. However, the examples described below are only some example embodiments of the present disclosure, and the present disclosure is not limited to the examples described below.

### Example 1

### (1) Preparation of Composite Positive Electrode Active Material

### (Preparation of a first electrode active material)

FePO₄ as an iron phosphate-based precursor and Li₂CO₃ as a lithium raw material were mixed in a molar ratio of 2:1 to prepare a raw material mixture. A carbon raw material was prepared by mixing glucose and polyethylene glycol in a weight ratio of 5:5. 90 wt% of the raw material mixture and 10 wt% of the carbon raw material were mixed, and distilled water as a second solvent was added thereto and then milled to prepare a second slurry. The wet milling was carried out using a ball milling apparatus. Specifically, a mixture of about 90 wt% of the raw material mixture and about 10 wt% of the carbon source material was introduced into a milling container having a capacity of about 5 L, together with about 3 kg of zirconia balls and about 2 kg of water, and the wet milling was performed by rotating the container at a rotational speed of about 100 rpm for about 3 hours. During the wet milling, TiO₂ as a titanium-based raw material, and the amount was adjusted such that Ti accounted for 0.4 mol% based on a total metal, excluding lithium, of a finally obtained lithium iron phosphate-based compound.

The wet-milled slurry was added into a spray dryer (Büchi Mini Spray Dryer B-290) at 0.5 kg/min, and then spray-dried at 200°C to obtain a second dried product. This second dried product was fired at a temperature 750 °C for 8 hours to obtain a second fired product, which was pulverized into primary particles by using an air Jet mill device at 6000 rpm to obtain a first positive electrode active material. Through the pulverizing process, the second fired product, which included the lithium iron phosphate-based compound in the form of secondary particles in which a plurality of primary particles were agglomerated, was pulverized into a first positive electrode active material in which the plurality of primary particles were not agglomerated but separated. The first positive electrode active material was in the form of primary particles having an average particle diameter of 0.5 µm and a composition of LiFe_{0.996}Ti_{0.004}PO₄.

### (Preparation of a second electrode active material)

Li₂CO₃ and Mn₂O₃ were mixed at a molar ratio of 1.02:2.0, followed by calcination in an oxygen atmosphere. The mixture was heated from 25°C to 820°C at a heating rate of 5°C/min and maintained at 820°C for 8 hours to obtain a calcined product. Thereafter, the obtained calcined product was sieved through a 325 mesh to prepare a second positive electrode active material. In this case, the second positive electrode active material was in a secondary particle form in which a plurality of primary particles (or single particles) were aggregated, the average particle diameter of the secondary particles was 9 µm, and the composition was Li_{1.02}Mn₂O₄. The secondary particles of the second positive electrode active material were separated into primary particle (or single particle) forms during a wet milling process performed in the manufacturing process of the composite positive electrode active material described below, and the separated primary particles (or the separated single particles) subsequently constituted secondary particles of the composite positive electrode active material prepared through a spray drying process.

### (Preparation of Irreversible Positive Electrode Additive)

As the irreversible positive electrode additive, a lithium cobalt-based oxide having a primary particle (or single particle) form, an average particle diameter of the primary particles (or the single particles) of 7 µm, and a composition of Li₃CoO₄ (manufacturer: XTC New Energy Materials Co., Ltd.) was prepared.

### (Manufacturing of Composite Positive Electrode Active Material)

The first positive electrode active material, the second positive electrode active material, and the irreversible positive electrode additive were mixed together using a mixer (L5M-A) at 15 rpm for 30 minutes, and then wet-milled in ethanol as a first solvent to prepare a first slurry. Herein, the first slurry was prepared by mixing the first positive electrode active material and the second positive electrode active material in a weight ratio of 80:20, and then adding the irreversible positive electrode additive in an amount of 0.5 parts by weight based on 100 parts by weight of the first positive electrode active material and the second positive electrode active material. The wet milling was performed using a ball milling apparatus. Specifically, about 3 kg of zirconia balls, about 2 kg of ethanol, and about 2 kg of a mixture of the first positive electrode active material, the second positive electrode active material, and the irreversible positive electrode additive were introduced into a milling container having a capacity of about 5 L, and the container was rotated at a rotational speed of about 50 rpm for about 1 hour. During the wet milling process, the secondary particles of the second positive electrode active material were separated into primary particles (or single particles).

The first slurry was added into a spray dryer (Büchi Mini Spray Dryer B-290) at 0.5 kg/min and spray dried at 200°C to obtain the first dried product. The first dried product was a composite positive electrode active material in the form of secondary particles in which the primary particles of the first positive electrode active material, the primary particles (or the single particles) of the second positive electrode active material, and the primary particles (or the single particles) of the irreversible positive electrode additive were agglomerated.

### (2) Manufacturing of Positive Electrode

The composite positive electrode active material was mixed with polyvinylidene fluoride as a binder and carbon nanotube as a conductive material in a weight ratio of 96:2:2 (= positive electrode active material:binder:conductive material) to prepare a positive electrode active material composition. This composition was dispersed in an N-methyl pyrrolidone solvent to prepare a positive electrode active material slurry, which was coated on a 15 µm -thick Al foil, and then dried and compressed to manufacture a positive electrode.

### (3) Manufacturing of Rechargeable Lithium Battery Cell

97.5 wt% of graphite as a negative electrode active material, and 1.5 wt% of carboxymethyl cellulose and 1 wt% of styrene butadiene rubber as a binder were dispersed in distilled water to prepare a negative electrode active material slurry. This slurry was coated on a 10 µm-thick Cu foil and then dried and compressed to manufacture a negative electrode.

Between the positive electrode and the negative electrode, a 10 µm-thick polyethylene separator was disposed to manufacture an electrode assembly, which was inserted into a case, and an electrolyte was injected thereinto to manufacture a rechargeable lithium battery cell (a pouch-type cell of 100 mAh level). The electrolyte was prepared by mixing EC (ethylenecarbonate):EMC (ethylmethylcarbonate):DMC (dimethylcarbonate) in a volume ratio of 2:4:4 and dissolving 1.15 M LiPF₆ in the mixed solvent.

### Examples 2 to 4

Composite positive electrode active materials, positive electrodes, and rechargeable lithium battery cells according to Examples 2 to 4 were respectively manufactured in the same manner as in Example 1 except that the irreversible positive electrode additive was added in an amount shown in Table 1 below instead of 0.5 parts by weight based on 100 parts by weight of the first and second positive electrode active materials to prepare the first slurry in '(1) Preparation of Composite Positive Electrode Active Material.'

Herein, in Table 1, the amount of the irreversible positive electrode additive was calculated based on100 parts by weight of the first and second positive electrode active materials and then rounded to two decimal places.

**Table 1:**

| | Composition of first positive electrode active material | Amount of irreversible positive electrode additive (based on 100 parts by weight of the first positive electrode active material and the second positive electrode active material) |
|---|---|---|
| Example 1 | LiFe_{0.996}Ti_{0.004}PO₄ | 0.5 |
| Example 2 | LiFe_{0.996}Ti_{0.004}PO₄ | 1.01 |
| Example 3 | LiFe_{0.996}Ti_{0.004}PO₄ | 1.52 |
| Example 4 | LiFe_{0.996}Ti_{0.004}PO₄ | 2.04 |

### Example 5

A composite positive electrode active material, a positive electrode, and a rechargeable lithium battery cell according to Example 5 were manufactured in the same manner as in Example 2 except that the first slurry was added to a spray dryer and then spray-dried to obtain a first dried product, which was additionally fired at 400 °C under a nitrogen atmosphere for 8 hours to obtain a first fired product in '(1) Preparation of Composite Positive Electrode Active Material' of Example 2, and the first fired product was used as the composite positive electrode active material in '(2) Manufacturing of Positive Electrode.'

Herein, the composite positive electrode active material may be referred to as a first fired product.

### Comparative Example 1

A composite positive electrode active material, a positive electrode, and a rechargeable lithium battery cell were manufactured in the same manner as in Example 1 except that the first positive electrode active material, the second positive electrode active material, and the irreversible positive electrode additive, which were prepared in '(1) Preparation of Composite Positive Electrode Active Material,' were simply mixed using a mixer (L5M-A) at 15 rpm for 30 minutes and then used as the positive electrode active material in '(2) Manufacturing of Positive Electrode' of Example 1. Herein, the first positive electrode active material and the second positive electrode active material were mixed in a weight ratio of 80:20, and the irreversible positive electrode additive was added in an amount of 0.5 parts by weight based on 100 parts by weight of the first and second positive electrode active materials.

### Evaluation Example 1: Evaluation of Composite Positive Electrode Active Material

### (1) Porosity Evaluation

The composite positive electrode active materials of Examples 1 to 5 were measured with respect to porosity, and the results are shown in Table 2 below. The porosity was obtained by taking a scanning electron microscope image on the cross-section of secondary particles to measure a ratio of an area of pores in the cross-section of the secondary particles to a cross-sectional area of the secondary particles of each composite positive electrode active material, and the results are shown in Table 2 below.

### (2) Particle Analysis

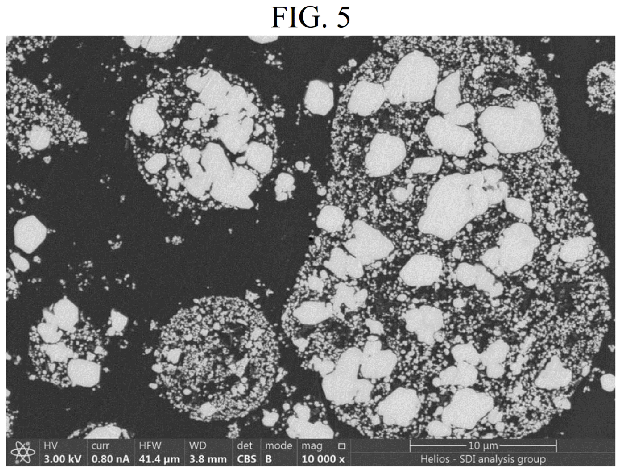

A cross-section of the composite positive electrode active material prepared in Example 2 was photographed using a scanning electron microscope (SEM). FIG. 5 shows the scanning electron microscope image of the cross-section of the composite positive electrode active material of Example 2.

In FIG. 5, within a single composite positive electrode active material particle, black indicates internal pores, and gray indicates the first and second positive electrode active materials and the irreversible positive electrode additive. Among the materials marked by gray, the second positive electrode active material and the irreversible positive electrode additive refers to particles having a particle size of greater than or equal to about 2 µm, whereas the first positive electrode active material refers to the remaining particles having a particle size of less than about 2 µm, wherein the particle size is defined as a diameter in the case of spherical particles and as a square root of a product of a major axis length and a minor axis length in the case of non-spherical particles.

Referring to FIG. 5, a plurality of the first positive electrode active material particles, the second positive electrode active material particles, and the irreversible positive electrode additive particles were agglomerated each other to form an assembly form.

Similar to Example 2, scanning electron microscope images were taken of the positive electrode active materials prepared in Examples 1 and 3 to 5, and with reference to the images, the average particle diameter of the secondary particles, the average particle diameter, the arithmetic mean size and its standard deviation of the primary particles of the first positive electrode active material, the average particle diameter of the primary particles (or the single particles) of the second positive electrode active material, and the average particle diameter of the primary particles (or the single particles) of the irreversible positive electrode additive were measured, and are shown in Table 2 below.

The average particle diameter of the secondary particles was obtained by randomly selecting 20 secondary particles in the scanning electron microscope image of each of the composite positive electrode active materials, measuring the size of each secondary particle, and calculating an arithmetic mean of the size of each secondary particle, wherein the size of each secondary particle is defined as a diameter in the case of a spherical particle, and as a square root of a product of a major axis length and a minor axis length in the case of a non-spherical particle. The average particle diameter of the primary particles of the first positive electrode active material, the average particle diameter of the primary particles (or the single particles) of the second positive electrode active material, and the average particle diameter of the irreversible positive electrode additive were also obtained by randomly selecting 20 primary particles of the first positive electrode active material, 20 primary particles (or single particles) of the second positive electrode active material, and 20 primary particles (or single particles) of the irreversible positive electrode additive, respectively, in the scanning electron microscope image of each composite positive electrode active material, measuring the size of each primary particle (or single particle), and calculating an arithmetic mean of the size of each primary particle (or single particle), wherein the size of each primary particle (or single particle) is defined as a diameter in the case of a spherical particle, and as a square root of a product of a major axis length and a minor axis length in the case of a non-spherical particle. In this case, within the composite positive electrode active material, as described above, particles having a particle size of less than about 2 µm are regarded as primary particles of the first positive electrode active material and,their particle sizes are measured to obtain an arithmetic mean, whereas particles having a particle size of greater than or equal to about 2 µm are regarded as primary particles (or single particles) of the second positive electrode active material and primary particles (or single particles) of the irreversible positive electrode additive, and their particle sizes are measured to obtain an arithmetic mean.

Meanwhile, when the particle size is 2 µm or more, the particles are regarded as primary particles (or single particles) of the second positive electrode active material and primary particles (or single particles) of the irreversible positive electrode additive, and they are distinguished based on electron microscopy images and energy-dispersive X-ray spectroscopy (EDX) analysis results, after which their respective particle sizes are measured and the arithmetic mean is calculated. Specifically, a cross-sectional or surface image of the positive electrode is obtained using scanning electron microscopy (SEM), and EDX analysis is performed on the same field of view. The shape and diameter of each particle are measured from the SEM image, and the elemental distribution, such as Mn, is confirmed through EDX analysis. In this case, particles in which Mn is predominantly distributed are determined to be primary particles (or single particles) of the second positive electrode active material, whereas particles in which Mn is not detected or in which Co is mainly detected are determined to be primary particles (or single particles) of the irreversible positive electrode additive.

The arithmetic mean size and standard deviation of the first positive electrode active material were obtained by measuring sizes of 20 primary particles of the first positive electrode active material from the scanning electron microscope image of the cross-section of the composite positive electrode active material-wherein the particle size is defined as a diameter in the case of spherical particles and as a square root of a product of a major axis length and a minor axis length in the case of non-spherical particles-and calculating the arithmetic mean and the standard deviation of the arithmetic mean.

Herein, Comparative Example 1, in which the first positive electrode active material, the second positive electrode active material, and the irreversible positive electrode additive were simply mixed, unlike Example 1 in which they were spray-dried to manufacture a dried product and then fired into an assembly form and the like, exhibited that the primary particles of the first positive electrode active material, the primary particles (or the single particles) of the second positive electrode active material, and the primary particles (or the single particles) of the irreversible positive electrode additive were present in a dispersed state, making it unnecessary to perform the evaluation shown in Table 2.

**Table 2:**

| | Porosity (%) | Average particle diameter of secondary particles (µm) | Average particle diameter of primary particles of first positive electrode active material (µm) | Arithmetic mean size of primary particles of first positive electrode active material (nm) | Standard deviation of arithmetic mean size of primary particles of first positive electrode active material (nm) | Average particle diameter of primary particles (or the single particles) of second positive electrode active material (µm) | Average particle diameter of irreversible positive electrode additive (µm) |
|---|---|---|---|---|---|---|---|
| Ex. 1 | 17.6 | 15 | 0.5 | 200 | 15.0 | 4 | 7 |
| Ex. 2 | 17.3 | 15 | 0.5 | 200 | 15.0 | 4 | 7 |
| Ex. 3 | 17.2 | 15 | 0.5 | 200 | 15.0 | 4 | 7 |
| Ex. 4 | 17.0 | 15 | 0.5 | 200 | 15.0 | 4 | 7 |
| Ex. 5 | 16.4 | 15 | 0.5 | 200 | 13.5 | 4 | 7 |

Referring to Table 2 above, the composite positive electrode active materials of Examples 1 to 5 were such that the first positive electrode active material was prepared to have relatively small and uniform primary particles according to its preparation method, and also formed with the primary particles (or the single particles) of the second positive electrode active material and the primary particles (or the single particles) of the irreversible positive electrode additive into an assembly form. Meanwhile, the composite positive electrode active material prepared in Example 5 was different from the composite positive electrode active material prepared in Example 2 in that the composite positive electrode active material prepared in Example 5 was further fired. It can be confirmed that the porosity of the composite positive electrode active material prepared in Example 5 was further reduced, and the standard deviation of the primary particles was further reduced compared to the composite positive electrode active material prepared in Example 2, which was not further fired. This is understood to be because, as the first dried product, e.g., the composite positive electrode active material prepared in Example 2, is further fired, the bonding between particles within the assembly becomes denser, the pores within the assembly decrease, and as a result, the porosity decreases. In addition, it is understood that during the additional firing process, heat energy acts on the interface between particles, causing relatively small particles to grow or disappear and large particles to have a slow growth rate, resulting in a relaxation of the interparticle size distribution, making the size distribution of primary particles of the first positive electrode active material relatively uniform and reducing the standard deviation.

### Evaluation Example 2: Pellet Density Evaluation

The (composite) positive electrode active materials of Examples 1 to 5 and Comparative Examples 1 to 4 were measured with respect to pellet density, which is shown in Table 3 below. The pellet density was determined by placing 3 g of each of the (composite) positive electrode active materials in a mold, maintaining each of the (composite) positive electrode active materials in the mold at 4 tons for 30 seconds at a temperature of 25°C, measuring a thickness of the pellet, calculating the pellet volume using the thickness of the pellet and the diameter of the mold, and dividing the mass of the (composite) positive electrode active material by the calculated volume.

### Evaluation Example 3: Evaluation of Battery Performance

### (1) Evaluation of Initial Charge/discharge Capacity and Efficiency

The rechargeable lithium battery cells of Examples 1 to 5 and Comparative Example 1 were charged to a battery voltage of 4.3 V at 0.2 C-rate and discharged to a cut-off voltage of 3.0 V at 0.2 C-rate at 25 °C to measure initial charge/discharge capacity, which was used to calculate initial efficiency according to Equation 1. The results are shown in Table 3 below. Equation 1: 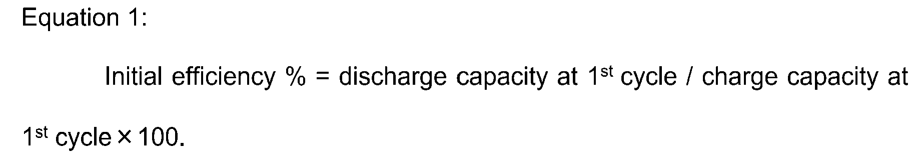 Initial efficiency % = discharge capacity at 1st cycle / charge capacity at 1st cycle × 100.

### (2) Average Voltage

The rechargeable lithium battery cells according to Examples 1 to 5 and Comparative Example 1 were measured with respect to an average voltage at SOC (State Of Charge) 50% during the initial discharge, and the results are shown in Table 3.

### (3) Low-temperature Capacity Evaluation

The rechargeable lithium battery cells of Examples 1 to 5 and Comparative Example 1 were fully charged to a battery voltage of 4.3 V at 0.2 C-rate and then discharged to 3.0 V at 0.2 C-rate under an atmosphere set at -20 °C to measure low-temperature discharge capacity. The results are shown in Table 3 below.

### (4) Cycle-life Characteristics Evaluation

The rechargeable lithium battery cells of Examples 1 to 5 and Comparative Example 1 were 50 times repeatedly charged to a battery voltage of 4.3 V at 0.2 C-rate and then discharged to a cut-off voltage of 3.0 V at 0.2 C-rate after the initial charge and discharge to calculate a ratio of 50^{th} cycle discharge capacity to the initial discharge capacity according to Equation 2, and the results are shown in Table 3 below. Equation 2: 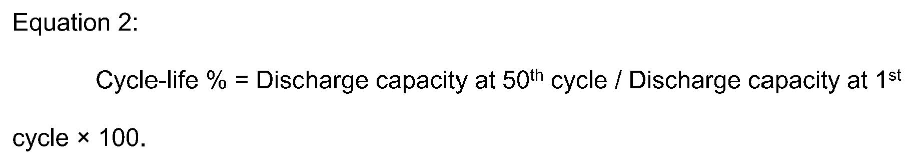 Cycle-life % = Discharge capacity at 50th cycle / Discharge capacity at 1st cycle × 100.

### (5) High-temperature Storage Characteristics Evaluation

The rechargeable lithium battery cells of Examples 1 to 5 and Comparative Example 1 were charged to SOC 98% at 0.2 C-rate and then allowed to stand at 45 °C in a high-temperature chamber for 7 days to measure a capacity retention rate, and the results are shown in Table 3 below.

### (6) Capacity per Volume Evaluation

The rechargeable lithium battery cells of Examples 1 to 5 and Comparative Example 1 were measured with respect to capacity per volume by multiplying the density with the capacity, and the results are shown in Table 3.

**Table 3:**

| | Pellet density (g/cc) | Average voltage (V) | 0.2 C initial charge capacity (mAh/g ) | 0.2 C initial discharge capacity (mAh/g ) | 0.2 C efficiency (%) | Low temperature (-20 °C) discharge capacity (mAh/g ) | 0.2C cycle-life (%, @50 cy) | High-temperature 45 °C capacity retention rate (%) | Capacity per volume (mA h/cc ) |
|---|---|---|---|---|---|---|---|---|---|
| Ex . 1 | 2.59 | 3.35 | 157.2 | 145.5 | 92.6 | 65 | 94.5 | 91.7 | 373 |
| Ex .2 | 2.61 | 3.35 | 161.2 | 144.9 | 89.9 | 68 | 94.8 | 91.2 | 385 |
| Ex .3 | 2.64 | 3.35 | 164.2 | 144.8 | 88.2 | 68 | 94 | 90.8 | 397 |
| Ex . 4 | 2.63 | 3.35 | 167.1 | 144.2 | 86.3 | 68 | 93.8 | 90.5 | 402 |
| Ex .5 | 2.65 | 3.35 | 162.0 | 145.8 | 90.0 | 69 | 95.3 | 93.2 | 393 |
| Comp. Ex . 1 | 2.50 | 3.35 | 156.7 | 144.2 | 92.0 | 58 | 92.1 | 89.2 | 358 |

Referring to Table 3, it can be confirmed that the rechargeable lithium battery cell of Example 1, whose positive electrode active material was prepared in an assembly form by mixing the first and second positive electrode active materials in the same weight ratio and adding an irreversible positive electrode additive thereto, exhibit significantly desired or improved pellet density, initial charge/discharge capacity, efficiency thereof, low-temperature discharge capacity, cycle-life characteristics, high-temperature capacity retention rate, and capacity per volume compared to Comparative Example 1, whose positive electrode active material was prepared by simply mixing the first positive electrode active material, the second positive electrode active material, and the irreversible positive electrode additive. The rechargeable lithium battery cell of Comparative Example 1 including the positive electrode active material prepared by simply mixing the first positive electrode active material, the second positive electrode active material, and the irreversible positive electrode additive had no sufficient electrochemical reaction among these different particles, causing each particle isolation, which led to a physical connection challenge among the different particles, thereby exhibiting overall deteriorated battery performance and in particular, significantly deteriorated low-temperature discharge capacity and high-temperature storage characteristics. Meanwhile, Examples 1 to 4, whose positive electrode active material was prepared by fixing the weight ratio of the first and second positive electrode active materials but adding the irreversible positive electrode additive in a different amount thereto, were confirmed to exhibit that as the amount of the irreversible positive electrode additive was increased, low-temperature discharge capacity and capacity per volume was increased, even though initial discharge capacity, cycle-life and a high-temperature capacity retention rate were slightly deteriorated, thereby exhibiting overall desired or improved battery performance.

In addition, the rechargeable lithium battery cell including the positive electrode active material of Example 5, in which the dried product was additionally fired in the manufacturing process of the composite positive electrode active material of Example 2, was confirmed to exhibit overall improved battery performance, compared to Example 2. It was understood that the fired product obtained by additionally firing the dried product in the assembly formation process was used as the positive electrode active material to further strengthen the boning among the primary particles of the first positive electrode active material, the primary particles (or the single particles) of the second positive electrode active material, and the primary particles (or the single particles) of the irreversible positive electrode additive in the dried product, further stabilizing their crystal structures and thereby, improving electrochemical characteristics of the composite positive electrode active material.

While this disclosure has been described in connection with what is presently considered to be practical example embodiments, it is to be understood that the disclosure is not limited to the disclosed example embodiments. On the contrary, the disclosure is intended to cover various modifications and equivalent arrangements included within the spirit and scope of the appended claims.

### Description of symbols:

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

The present disclosure additionally includes the following numbered embodiments:
1. A composite positive electrode active material, comprising
   a first positive electrode active material comprising a lithium iron phosphate-based compound and in a form of primary particles,
   a second positive electrode active material including a lithium manganese-based oxide and in a form of single particles, and
   an irreversible positive electrode additive including lithium cobalt-based oxide and in a form of single particles,
   wherein the composite positive electrode active material has a particle form including a plurality of the primary particles of the first positive electrode active material, a plurality of the single particles of the second positive electrode active material, and a plurality of the single particles of the irreversible positive electrode additive.
2. The composite positive electrode active material according to embodiment 1, wherein
   the lithium iron phosphate-based compound comprises a compound represented by Chemical Formula 1, a compound represented by Chemical Formula 2, or a combination thereof:

      [Chemical Formula 1] Liₐ₁Fe₍₁₋ₓ₁₎M¹ₓ₁PO₄
   wherein, in Chemical Formula 1, 0.9≤a1≤1.5, 0≤x1≤0.4, and M¹ is Al, Ca, Ce, Cr, Cu, La, Mg, Mn, Mo, Nb, Ni, Sn, Sr, Ti, V, W, Y, Zn, Zr, or a combination thereof,

      [Chemical Formula 2] Liₐ₂Mnₓ₂Fe_{(1-x2-y2)}M²_{y2}PO₄
   wherein, in Chemical Formula 2, 0.9≤a2≤1.5, 0.1≤x2≤0.9, 0≤y2<0.9, and M² is Al, Ca, Ce, Cr, Cu, La, Mg, Mo, Nb, Ni, Sn, Sr, Ti, V, W, Y, Zn, Zr, or a combination thereof.
3. The composite positive electrode active material according to embodiment 1, wherein
   the lithium iron phosphate-based compound comprises Al, Mg, Ti, V, or combination thereof, and
   the Al, Mg, Ti, V, or the combination thereof is included in an amount of about 0.1 mol% to about 0.5 mol% based on a total metal excluding lithium.
4. The composite positive electrode active material according to embodiment 1, wherein
   an arithmetic mean size of the primary particles of the first positive electrode active material is less than or equal to about 200 nm, and
   a standard deviation of the primary particles of the first positive electrode active material is less than or equal to about 100 nm.
5. The composite positive electrode active material according to embodiment 1, wherein
   the lithium manganese-based oxide is represented by Chemical Formula 3:

      [Chemical Formula 3] Liₐ₃Mnₓ₃M³_{y3}O_{4-b3}X_{b3}
   wherein, in Chemical Formula 3, 0.9≤a3≤1.8, 1.7≤x3≤2, 0≤y3≤0.3, 1.9≤x3+y3≤2.1, and 0≤b3≤0.1, M³ is Al, B, Ba, Ca, Ce, Cr, Fe, Mg, Mo, Nb, Si, Sn, Sr, Ti, V, W, Y, Zr, or a combination thereof, and X is F, P, S, or a combination thereof.
6. The composite positive electrode active material according to embodiment 1, wherein
   an average particle diameter, such as the (more specific) average particle diameter D₅₀, of the single particles of the second positive electrode active material is about 0.1 µm to about 10 µm.
7. The composite positive electrode active material according to embodiment 1, wherein
   the lithium cobalt-based oxide is represented by Chemical Formula 5:

      [Chemical Formula 5] LiₓCoO_{y}
   wherein, in Chemical Formula 5, 1<x≤6, and 1≤y≤4.
8. The composite positive electrode active material according to embodiment 1, wherein
   an average particle diameter, such as the (more specific) average particle diameter D₅₀, of the single particles of the irreversible positive electrode additive is about 0.5 µm to about 10 µm.
9. The composite positive electrode active material according to embodiment 1, wherein optionally the composite positive electrode active material is a form of a plurality of secondary particles, and wherein particles of the composite positive electrode active material have an average particle diameter, such as the (more specific) average particle diameter D₅₀, of about 3 µm to about 20 µm.
10. The composite positive electrode active material according to embodiment 1, wherein
   the first positive electrode active material is included in an amount of about 50 wt% to about 99 wt% based on 100 wt% of the first positive electrode active material and the second positive electrode active material, and the second positive electrode active material is included in an amount of about 1 wt% to about 50 wt% based on 100 wt% of the first positive electrode active material and the second positive electrode active material.
11. The composite positive electrode active material according to embodiment 1, wherein
   the irreversible positive electrode additive is added in an amount of about 0.1 parts by weight to about 10 parts by weight based on 100 parts by weight of the first positive electrode active material and the second positive electrode active material.
12. The composite positive electrode active material according to embodiment 1, wherein
   particles of the composite positive electrode active material comprise pores therein, and a porosity, which is a ratio of an area occupied by the pores to a cross-sectional area of the particles of the composite positive electrode active material is about 10% to about 50%.
13. The composite positive electrode active material according to embodiment 1, wherein
   a pellet density of the composite positive electrode active material is about 2.5 g/cc to about 2.8 g/cc.
14. A method for preparing a composite positive electrode active material, comprising
   preparing a first positive electrode active material comprising a lithium iron phosphate-based compound and in a form of primary particles;
   mixing and wet dispersing the first positive electrode active material, a second positive electrode active material including a lithium manganese-based oxide and in a form of single particles, and an irreversible positive electrode additive including lithium cobalt-based oxide and in a form of single particles to prepare a first slurry; and
   adding the first slurry to a spray dryer and spray drying the same to prepare a first dried product.
15. The method according to embodiment 14, wherein
   the method for preparing the composite positive electrode active material further comprises,
   firing the first dried product to prepare a first fired product, after the adding the first slurry to a spray dryer and spray drying the same to prepare a first dried product.
16. A rechargeable lithium battery, comprising
   a positive electrode comprising a positive electrode current collector, and a positive electrode active material layer disposed on the positive electrode current collector and comprising the composite positive electrode active material according to embodiment 1;
   a negative electrode; and
   an electrolyte.

## Claims

1. A composite positive electrode active material, comprising:
a first positive electrode active material comprising a lithium iron phosphate-based compound in a form of primary particles,
a second positive electrode active material including a lithium manganese-based oxide in a form of primary particles, and
an irreversible positive electrode additive including lithium cobalt-based oxide in a form of primary particles,
wherein the composite positive electrode active material has a particle form including a plurality of the primary particles of the first positive electrode active material, a plurality of the primary particles of the second positive electrode active material, and a plurality of the primary particles of the irreversible positive electrode additive.

2. The composite positive electrode active material as claimed in claim 1, wherein the lithium iron phosphate-based compound comprises a compound represented by Chemical Formula 1, a compound represented by Chemical Formula 2, or a combination thereof:
Chemical Formula 1: Liₐ₁Fe₍₁₋ₓ₁₎M¹ₓ₁PO₄;
wherein:
0.9≤a1≤1.5, 0≤x1≤0.4, and
M¹ is Al, Ca, Ce, Cr, Cu, La, Mg, Mn, Mo, Nb, Ni, Sn, Sr, Ti, V, W, Y, Zn, Zr, or a combination thereof,
Chemical Formula 2: Liₐ₂Mnₓ₂Fe_{(1-x2-y2)}M²_{y2}PO₄;
wherein:
0.9≤a2≤1.5, 0.1≤x2≤0.9, 0≤y2<0.9, x2+y2<1, and
M² is Al, Ca, Ce, Cr, Cu, La, Mg, Mo, Nb, Ni, Sn, Sr, Ti, V, W, Y, Zn, Zr, or a combination thereof.

3. The composite positive electrode active material as claimed in claim 1 or 2, wherein:
the lithium iron phosphate-based compound comprises Al, Mg, Ti, V, or a combination thereof, and
preferably the Al, Mg, Ti, V, or the combination thereof is included in an amount in a range of 0.1 mol% to 0.5 mol% based on a total metal excluding lithium.

4. The composite positive electrode active material as claimed in any one of claims 1 to 3, wherein:
an arithmetic mean size of the primary particles of the first positive electrode active material is less than or equal to 200 nm, and
preferably a standard deviation of the primary particles of the first positive electrode active material is less than or equal to 100 nm.

5. The composite positive electrode active material as claimed in any one of claims 1 to 4, wherein the lithium manganese-based oxide is represented by Chemical Formula 3:
Chemical Formula 3: Liₐ₃Mnₓ₃M³ _{y3}O_{4-b3}X_{b3};
wherein:
0.9≤a3≤1.8, 1.7≤x3≤2, 0≤y3≤0.3, 1.9≤x3+y3≤2.1, and 0≤b3≤0.1, M³ is Al, B, Ba, Ca, Ce, Cr, Fe, Mg, Mo, Nb, Si, Sn, Sr, Ti, V, W, Y, Zr, or a combination thereof, and X is F, P, S, or a combination thereof.

6. The composite positive electrode active material as claimed in any one of claims 1 to 5, wherein an average particle diameter of the primary particles of the second positive electrode active material is in a range of 2 µm to 10 µm.

7. The composite positive electrode active material as claimed in any one of claims 1 to 6, wherein the lithium cobalt-based oxide is represented by Chemical Formula 5:
Chemical Formula 5: LiₓCoO_{y};
wherein 1<x≤6, and 1≤y≤4.

8. The composite positive electrode active material as claimed in any one of claims 1 to 7, wherein an average particle diameter of the primary particles of the irreversible positive electrode additive is in a range of 2 µm to 10 µm.

9. The composite positive electrode active material as claimed in any one of claims 1 to 8, wherein the composite positive electrode active material is a form of a plurality of secondary particles, and the secondary particles of the composite positive electrode active material have an average particle diameter in a range of 3 µm to 20 µm.

10. The composite positive electrode active material as claimed in any one of claims 1 to 9, wherein:
the first positive electrode active material is included in an amount in a range of 50 wt% to 99 wt% based on 100 wt% of the first positive electrode active material and the second positive electrode active material, and
the second positive electrode active material is included in an amount in a range of 1 wt% to 50 wt% based on 100 wt% of the first positive electrode active material and the second positive electrode active material.

11. The composite positive electrode active material as claimed in any one of claims 1 to 10, wherein the irreversible positive electrode additive is added in an amount in a range of 0.1 parts by weight to 10 parts by weight based on 100 parts by weight of the first positive electrode active material and the second positive electrode active material.

12. The composite positive electrode active material as claimed in any one of claims 1 to 11, wherein particles of the composite positive electrode active material comprise pores therein, and a porosity is in a range of 10% to 50%, and/or
wherein a pellet density of the composite positive electrode active material is in a range of 2.5 g/cc to 2.8 g/cc.

13. A method (600) for preparing a composite positive electrode active material, the method (600) comprising:
preparing (610) a first positive electrode active material comprising a lithium iron phosphate-based compound in a form of primary particles;
mixing and wet milling (620) the first positive electrode active material, a second positive electrode active material including a lithium manganese-based oxide in a form of secondary particles in which a plurality of primary particles are agglomerated, and an irreversible positive electrode additive including lithium cobalt-based oxide in a form of primary particles to prepare a first slurry; and
adding the first slurry to a spray dryer and spray drying (630) the first slurry to prepare a first dried product.

14. The method as claimed in claim 13, further comprising firing the first dried product to prepare a first fired product, after the adding the first slurry to the spray dryer and spray drying (630) the first slurry to prepare the first dried product.

15. A rechargeable lithium battery (100), comprising:
a positive electrode (10) comprising a positive electrode current collector, and a positive electrode active material layer disposed on the positive electrode current collector and comprising the composite positive electrode active material as claimed in any one of claims 1 to 12;
a negative electrode (20); and
an electrolyte.
